# EUROPÄISCHE PATENTSCHRIFT

(11) **EP 3 641 985 B1**
(45) Veröffentlichungstag und Bekanntmachung des Hinweises auf die Patenterteilung: **02.08.2023**
(21) Anmeldenummer: 18731431.5
(22) Anmeldetag: 13.06.2018
(51) Int. Cl.: B24B 33/02, B24B 33/08, B24B 33/06

(54) **HONVERFAHREN UND BEARBEITUNGSMASCHINE ZUM KONTURHONEN**
HONING METHOD AND MACHINE TOOL FOR CONTOUR HONING
PROCÉDÉ DE RODAGE ET MACHINE D'USINAGE POUR LE RODAGE DE CONTOURS

(30) Priorität: 19.06.2017 DE 102017210187
(43) Veröffentlichungstag der Anmeldung: 29.04.2020
(73) Patentinhaber: Elgan-Diamantwerkzeuge GmbH & Co. KG, 72622 Nürtingen (DE)
(72) Erfinder: ANGERBAUER, Ronald, 73098 Rechberghausen (DE); BACHMANN, Oliver, 72636 Frickenhausen (DE); HIEBER, Bernd, 72622 Nürtingen (DE); HOLLANK, Steffen, 71679 Asperg (DE); KRANICHSFELD, Florian, 72644 Oberboihingen (DE); WEIBLEN, Joachim, 72555 Metzingen (DE)
(74) Vertreter: Patentanwälte Ruff, Wilhelm, Beier, Dauster & Partner mbB
(86) Internationale Anmeldenummer: PCT/EP2018/065619
(87) Internationale Veröffentlichungsnummer: WO 2018/234114

(56) Entgegenhaltungen:
- EP-A1- 1 815 944
- DE-A1-102015 203 052
- US-A- 4 945 685

## Beschreibung

Die Erfindung betrifft ein Honverfahren zur Bearbeitung der Innenfläche einer Bohrung in einem Werkstück mithilfe mindestens einer Honoperation gemäß dem Oberbegriff von Anspruch 1, sowie eine zur Durchführung des Honverfahrens konfigurierte Bearbeitungsmaschine gemäß dem Oberbegriff von Anspruch 14. Ein bevorzugtes Anwendungsgebiet ist das Honen von Zylinderlaufflächen bei der Herstellung von Zylinderblöcken oder Zylinderlaufbuchsen für Hubkolbenmaschinen.

Die Zylinderlaufflächen in Zylinderblöcken (Zylinderkurbelgehäusen) oder Zylinderlaufbuchsen von Brennkraftmaschinen oder anderen Hubkolbenmaschinen sind im Betrieb einer starken tribologischen Beanspruchung ausgesetzt. Daher kommt es bei der Herstellung von Zylinderblöcken oder Zylinderlaufbuchsen darauf an, diese Zylinderlaufflächen so zu bearbeiten, dass später bei allen Betriebsbedingungen eine ausreichende Schmierung durch einen Schmiermittelfilm gewährleistet ist und der Reibwiderstand zwischen sich relativ zueinander bewegenden Teilen möglichst gering gehalten wird.

Die qualitätsbestimmende Endbearbeitung solcher tribologisch beanspruchbaren Innenflächen erfolgt in der Regel mit geeigneten Honverfahren, die typischer Weise mehrere aufeinanderfolgende Honoperationen umfassen. Das Honen ist ein Zerspanungsverfahren mit geometrisch unbestimmten Schneiden. Bei einer Honoperation wird ein aufweitbares Honwerkzeug innerhalb der zu bearbeitenden Bohrung zur Erzeugung einer Hubbewegung in Axialrichtung der Bohrung mit einer Hubfrequenz hin- und her bewegt und gleichzeitig zur Erzeugung einer der Hubbewegung überlagerten Drehbewegung mit einer vorgebbaren Drehzahl gedreht. Zur Aufweitung des Honwerkzeugs werden die am Honwerkzeug angebrachten Schneidstoffkörper über ein Zustellsystem mit einer radial zur Werkzeugachse wirkenden Zustellkraft und/oder Zustellgeschwindigkeit zugestellt und an die zu bearbeitende Innenfläche angedrückt. Beim Honen entsteht in der Regel an der Innenfläche ein für die Honbearbeitung typisches Kreuzschliffmuster mit sich überkreuzenden Bearbeitungsspuren, die auch als "Honriefen" bezeichnet werden.

Mit steigenden Anforderungen an die Sparsamkeit und Umweltfreundlichkeit von Motoren ist die Optimierung des tribologischen Systems Kolben/Kolbenringe/Zylinderlauffläche von besonderer Bedeutung, um geringe Reibung, geringen Verschleiß und geringen Ölverbrauch zu erreichen.

Der Reibungsanteil der Kolbengruppe kann bis zu 35% betragen, so dass eine Reibungsreduzierung in diesem Bereich wünschenswert ist.

In der WO 2014/146919 A1 wird ein Honverfahren beschrieben, bei dem eine in Bezug auf die Bohrungsachse rotationssymmetrische, flaschenförmige Bohrung erzeugt wird, die in der Nähe des Bohrungseintritts enger ist als weiter entfernt vom Bohrungseintritt. Bei einer Verfahrensvariante wird ein Honwerkzeug mit axial relativ langen Honleisten verwendet. Zur Erzeugung eines axial variierenden Materialabtrags werden in einer Hubveränderungsphase die Hublänge und/oder die Hublage der Hubbewegung verändert. Hierdurch kann ein axialer Konturverlauf erzeugt oder verändert werden. In der Anmeldung werden auch Honwerkzeuge beschrieben, die mindestens eine ringförmige Schneidgruppe aufweisen, die in Axialrichtung relativ kurz ist. Bei Verwendung derartiger Honwerkzeuge lassen sich Bohrungsformen mit axialem Konturverlauf besonders präzise und wirtschaftlich bearbeiten. Bei manchen der beschriebenen Honwerkzeuge sind Luftmessdüsen eines Durchmesser-Messsystems integriert

Die DE 10 2015 203 051 A1 beschreibt ein Honverfahren, mit dem eine in Bezug auf eine Bohrungsachse rotationssymmetrische, von der Kreiszylinderform abweichende Bohrungsform mit einem axialen Konturverlauf erzeugt werden kann. Zur Erzeugung eines axial variierenden Materialabtrags wird in mindestens einer Hubveränderungsphase die Hublänge und/oder die Hublage der Hubbewegung verändert. Bei einer der beschriebenen Varianten wird zur Veränderung der Hublänge und/oder der Hublage während der Hubveränderungsphase die Position eines oberen Umkehrpunktes und/oder die Position eines unteren Umkehrpunkts der Hubbewegung nach Maßgabe einer Voreinstellung verändert. Bei den Verfahren erfolgt eine Steuerung des über die Spindel auf das Honwerkzeug übertragenen Drehmoments in der Weise, dass das Drehmoment während der Hubveränderungsphase im Wesentlichen konstant bleibt. Dadurch können Bohrungen erzeugt werden, die im fertig bearbeiten Zustand einen axialen Konturverlauf haben, die den gewünschten Konturverlauf über die gesamte relevante Bohrungslänge mit ausreichender Präzision aufweisen.

Die DE 10 2015 209 609 A1 beschreibt Honverfahren und Honwerkzeuge zum "Konifizieren" rotationssymmetrischer, nicht zylindrischer Bohrungen. Unter anderem werden Honverfahren beschrieben, bei denen sich die Hublängen aufeinanderfolgender Doppelhübe durch Veränderung der Lage des oberen Umkehrpunktes inkrementell verändern. Dabei wird bei einer Ausführungsform eine inkrementelle Reduktion der Hublänge bei gleichbleibendem unteren Umkehrpunkt realisiert. Der Honvorgang wird jeweils beendet, sobald der obere Umkehrpunkt einen vorgegebenen Endwert erreicht. Ähnliche Verfahren sind auch in der DE 10 2015 221 714 A1 beschrieben.

Die EP 1 815 944 A1 beschreibt Honverfahren zur Bearbeitung der Innenfläche einer Bohrung in einem Werkstück mithilfe mindestens einer Honoperation, worin während einer Honoperation ein an eine Spindel angekoppeltes, aufweitbares Honwerkzeug innerhalb der Bohrung zur Erzeugung einer Hubbewegung in Axialrichtung der Bohrung hin und her bewegt und gleichzeitig zur Erzeugung einer der Hubbewegung überlagerten Drehbewegung gedreht wird. Bei manchen Ausführungsformen wird eine in Bezug auf eine Bohrungsachse rotationssymmetrische, von der Kreiszylinderform abweichende Bohrungsform mit einem axialen Konturverlauf erzeugt. Zur Erzeugung eines axial variierenden Materialabtrags wird in mindestens einer Hubveränderungsphase eine Hublänge und/oder eine Hublage der Hubbewegung verändert. Bei einer Ausführungsform ist eine In-Prozess-Regelung des Honprozesses nach Maßgabe von mehreren während des Honprozesses zeitgleich erfassten Durchmesser-Messwerten vorgesehen. Diese Durchmesser-Messsignale erlauben Rückschlüsse auf die aktuelle Form der in Bearbeitung befindlichen Bohrung. Die Steuerung der Honbearbeitung kann nach Maßgabe der mindestens zwei Durchmesser-Messsignale durchgeführt werden.

Die US 4,945,685 beschreibt Honverfahren, worin der Durchmesser unter anderem am oberen Ende des Hubwegs, am unteren Ende des Hubweges und in einer Zwischenposition zwischen diesen beiden Enden bestimmt wird, um die Bohrungsform zu bestimmen.

### AUFGABE UND LÖSUNG

Es ist eine Aufgabe der Erfindung, ein Honverfahren der eingangs erwähnten Art bereitzustellen, das es erlaubt, an Bohrungen, die im fertig bearbeiten Zustand einen axialen Konturverlauf haben sollen, den gewünschten Konturverlauf über die gesamte relevante Bohrungslänge mit hoher Präzision insbesondere mit verbesserter Gleichmäßigkeit des Konturverlaufs, zu erzeugen. Es ist eine weitere Aufgabe, eine zur Durchführung des Honverfahrens konfigurierte Bearbeitungsmaschine bereitzustellen.

Diese Aufgabe wird gelöst durch ein Honverfahren mit den Merkmalen von Anspruch 1. Weiterhin wird die Aufgabe gelöst durch eine Bearbeitungsmaschine mit den Merkmalen von Anspruch 14. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Das Honverfahren gehört zu derjenigen Gattung von Honverfahren, bei denen mithilfe eines in Achsrichtung der Bohrung variierenden Materialabtrags eine zur Bohrungsachse rotationssymmetrische Bohrungsform mit einem axialen Konturverlauf erzeugt wird. Eine solche Bohrungsform ist eine in Bezug auf die Bohrungsachse rotationssymmetrische Bohrungsform, die von einer Kreiszylinderform signifikant abweicht. Bei einer Bohrung mit axialem Konturverlauf gibt es mindestens einen Abschnitt, in welchem der Durchmesser der Bohrung in Axialrichtung kontinuierlich zunimmt oder kontinuierlich abnimmt. Ein typisches Beispiel für eine Bohrungsform mit axialem Konturverlauf ist eine konische Bohrung, bei der der Durchmesser zwischen einer Ebene kleinsten Durchmessers und einer Ebene größten Durchmessers des Abschnitts mehr oder weniger linear zunimmt. Auch in Axialrichtung nicht-lineare Änderungen des Durchmessers sind möglich. Eine Bohrungsform mit axialem Konturverlauf kann auch einen oder mehrere Abschnitte mit Kreiszylinderform aufweisen, also solche Abschnitte, bei denen der nominelle Durchmesser in Axialrichtung nicht variiert.

Zur Erzeugung eines axial variierenden Materialabtrags werden in mindestens einer Hubveränderungsphase die Hublänge und/oder die Hublage der Hubbewegung verändert. Dadurch kann erreicht werden, dass die am Honwerkzeug vorgesehenen Schneidstoffkörper manche axialen Abschnitte insgesamt häufiger durchlaufen bzw. überdecken als andere Axialabschnitte, so dass der durch den Kontakt mit den Schneidstoffkörpern bedingte Materialabtrag in unterschiedlichen axialen Abschnitten primär bzw. im Wesentlichen aufgrund unterschiedlicher Anzahl von Honüberdeckungen unterschiedlich stark ist.

Bei dem Honverfahren wird zumindest bei derjenigen Honoperation, die die Hubveränderungsphase enthält, ein Honwerkzeug verwendet, das eine ringförmige Schneidgruppe mit mehreren den Umfang des Werkzeugkörpers verteilten, radial zustellbaren Schneidstoffkörpern aufweist. Bevorzugte Ausgestaltungen derartiger Honwerkzeuge und Vorteile für diese Art von Honoperationen werden weiter unten in Detail beschrieben.

Eine Besonderheit des Honverfahrens besteht darin, dass während der Hubveränderungsphase, also während der Phase, in welcher sich die Hublänge und/oder die Hublage der Hubbewegung ändert, eine Messung des Ist-Durchmessers der Bohrung durchgeführt wird, um ein Durchmesser-Messsignal zu ermitteln, das den Ist-Durchmesser der Bohrung in einer zugehörigen Messebene repräsentiert, und dass in der Folge die Hublänge und/oder die Hublage der Hubbewegung in Abhängigkeit von diesem Durchmesser-Messsignal variabel gesteuert wird.

Gemäß der beanspruchten Erfindung ist dabei vorgesehen, dass bei der Durchmesser-Messung zur Ermittlung eines für den Soll-Ist-Vergleich vorgesehenen Durchmesser-Messwerts bzw. eines entsprechenden Durchmesser-Messsignal eine Messwerterfassung über einen gleitenden Mittelwert erfolgt, z.B. über eine einstellbare Menge von Messpunkten, wobei die gleitende Mittelwertbildung einen Abschnitt der Bohrung oder den gesamten gerade bearbeiteten Abschnitt der Bohrung erfassen kann. Hierdurch können für die Regelung besonders aussagekräftige Werte bereitgestellt werden.

Es wird somit ein geschlossener Regelkreis (Feedback-Steuerung) bereitgestellt, der dazu führt, dass die Hublänge und/oder die Hublage von Hubbewegungen während der Hubveränderungsphase als geregelte Größe durch die Ergebnisse einer während der Bearbeitung durchgeführten Durchmesser-Messung beeinflusst werden, so dass während des laufenden Honverfahrens über die Durchmesser-Messung automatisch, d.h. insbesondere ohne Eingriff eines Bedieners, Einfluss auf den Hub bzw. auf die Hubveränderung der axialen Komponente der Honwerkzeugbewegung ausgeübt wird. Die Erfassung des für die Regelung genutzten Durchmesser-Messsignals erfolgt nach Maßgabe einer vorgebbaren Messbedingung, z.B. in mindestens einer vorgebbaren Phase einer Hubbewegung.

Diese Vorgehensweise wird im Rahmen dieser Anmeldung auch als "automatische Konturregelung" bezeichnet, da die Hubbewegungen während der Hubveränderungsphase nicht mehr, wie beim Stand der Technik, nach Maßgabe einer Voreinstellung gesteuert werden (open loop control), sondern sich während der Bearbeitung dynamisch in Abhängigkeit von Durchmesser-Messsignalen ändern können (closed loop control). Es hat sich gezeigt, dass dadurch unabhängig von Variationen bei den Werkstückeigenschaften und/oder Variationen in den Umgebungsbedingungen und/oder Veränderungen des Schneidverhaltens der Schneidstoffkörper während des Honens der am Ende einer Honoperation vorliegende Ist-Konturverlauf systematisch und gleichmäßig über die bearbeitete Länge wesentlich näher bei dem idealerweise gewünschten Soll-Konturverlauf liegt als im Falle einer ausschließlich gesteuerten Konturhonung ohne Feedback durch ein In-Prozess-Messsystem. Das Verfahren wird dadurch den gesteigerten Genauigkeitsanforderungen beim Konturhonen von rotationssymmetrischen Bohrungen mit axialem Konturverlauf systematisch gerecht.

Im Rahmen der Entwicklung des Honverfahrens wurde unter anderem erkannt, dass die heute verfügbaren In-Prozess-Messsysteme keine ausreichende Dynamik besitzen, um nicht-kreiszylindrische Bohrungen in ausreichend hoher Genauigkeit zu vermessen. Andererseits steigen die Anforderungen an die Genauigkeit einer Konturhonung jedoch ständig. Während frühere Bohrungen mit axialem Konturverlauf hinsichtlich ihres kleinsten und ihres größten Durchmessers relativ großzügig toleriert wurden, gibt es inzwischen deutlich höhere Genauigkeitsanforderungen nicht nur bezüglich des kleinsten und des größten Durchmessers, sondern an den gesamten Konturverlauf. Es wurde u.a. erkannt, dass das Problem der In-Prozess-Messung einer nicht-zylindrischen Bohrung dadurch gelöst werden kann, dass eine gewünschte axiale Kontur, d.h. der axiale Soll-Konturverlauf, in viele ineinander liegende virtuelle Zylinder aufgeteilt wird.

Die erhöhten Genauigkeitsanforderungen waren bisher nicht oder nur unter stark erhöhtem konstruktivem und/oder steuerungstechnischen Aufwand zu erreichen. Im Rahmen der Entwicklung der vorliegenden Erfindung wurde unter anderem erkannt, dass das beim Honen stets variierende Schneidverhalten der Schneidstoffkörper (beispielsweise Honleisten) eine große Herausforderung darstellt, die mit herkömmlichen Verfahren nicht oder nur unzureichend gemeistert werden kann. Erfindungsgemäße Honverfahren mit automatischer Konturregelung beim Honen können auch diese während des Honprozesses auftretenden, schwer vorhersagbaren Effekte berücksichtigen. Die automatische Korrekturregelung erlaubt es zudem, neben relativ einfachen Konturen, wie beispielsweise einer rein konischen Bohrungsform, nahezu beliebige rotationssymmetrische Konturen exakt ausgeregelt herzustellen.

Bei bevorzugten Verfahrensvarianten umfasst eine Hubbewegung während der Hubveränderungsphase eine Vielzahl von aufeinanderfolgenden Hüben, die jeweils zwischen einem unteren Umsteuerpunkt und einem oberen Umsteuerpunkt verlaufen, wobei die axiale Position wenigstens eines der Umsteuerpunkte eines Hubs in Abhängigkeit eines bei einem vorhergehenden Hub ermittelten Durchmesser-Messsignals dynamisch verändert wird. Der Begriff "oberer Umsteuerpunkt" bezeichnet denjenigen Umsteuerpunkt, der näher bei dem Bohrungseintritt liegt, durch welchen das Honwerkzeug in die Bohrung eingeführt wird. Das Honverfahren kann grundsätzlich nicht nur beim Vertikalhonen, sondern auch beim Horizontalhonen genutzt werden.

Vorzugsweise wird die axiale Position wenigstens eines Umsteuerpunkts eines Hubs in Abhängigkeit von einem Durchmesser-Messsignal verändert, welches beim unmittelbar vorangehenden Hub ermittelt wurde, so dass die Hublänge und/oder Hublage jedes einzelnen Doppelhubs individuell in Abhängigkeit von einem Durchmesser-Messwert beim vorangehenden Doppelhub beeinflusst werden kann. Dadurch sind schnelle Reaktionszeiten bei eventuellen Durchmesserabweichungen erzielbar, wodurch präzise Konturverläufe erzeugt werden können.

Besonders bevorzugt ist es, wenn die axiale Position eines der Umsteuerpunkte fixiert wird und nur die axiale Position des anderen Umsteuerpunkts in Abhängigkeit von dem Durchmesser-Messsignal dynamisch variiert wird. Hierdurch kann eine besonders einfache und präzise Regelung realisiert werden.

Eine Bohrungsform kann insbesondere so aussehen, dass der axiale Konturverlauf (mindestens) einen Abschnitt aufweist, in welchem sich der Soll-Durchmesser zwischen einer ersten axialen Position mit einem kleinsten Durchmesser und einer zweiten axialen Position mit einem größten Durchmesser innerhalb des Abschnitts kontinuierlich vergrößert, dass der zu der zweiten axialen Position gehörende Umsteuerpunkt fixiert wird und die axiale Position des anderen Umsteuerpunkts in Abhängigkeit von dem Durchmesser-Messsignal dynamisch variiert wird. Innerhalb eines solchen Abschnitts liegt beispielsweise eine konische bzw. kegelstumpfförmige Kontur vor, wenn der Soll-Durchmesser linear mit der axialen Position variiert. Es ist auch eine nicht-lineare Variation des Durchmessers in Axialrichtung möglich, so dass die Mantellinie eines Abschnitts mit axial veränderlichem Durchmesser nicht gerade sein muss, sondern konvex oder konkav gekrümmt sein kann. Die Variation der axialen Position des anderen Umsteuerpunkts führt in der Regel zu einer Hubverkürzung, was auch so ausgedrückt werden kann, dass sich der zum kleineren Durchmesser gehörende Umsteuerpunkt schrittweise (in Inkrementen, inkrementell) in Richtung der zweiten axialen Position (mit relativ größtem Durchmesser) bewegt.

Prinzipiell ist es auch möglich, dass sich die Hublänge zwischen einem vorangehenden Hub und einem unmittelbar nachfolgenden Hub vergrößert, wenn die In-Prozess-Messung ergibt, dass dies zum Zwecke der Erzielung einer verbesserten Kontur förderlich ist.

Bei bevorzugten Ausführungsformen wird so vorgegangen, dass vor Beginn der Honoperation ein axialer Soll-Konturverlauf vorgegeben wird, der die Abhängigkeit eines Soll-Durchmessers der Bohrung von der axialen Hubposition repräsentiert, dass bei einem Hub der bei einer Hubposition gemessene Ist-Durchmesser mit dem zu der Hubposition gehörenden Soll-Durchmesser verglichen wird und dass aus dem Vergleich eine Durchmesserabweichung für die Hubposition ermittelt wird, wobei dann die Hublänge und/oder Hublage eines nachfolgenden Hubs in Abhängigkeit von der Durchmesserabweichung gegenüber einer Soll-Hublänge und/oder Soll-Hublage verändert wird. Dieser Regelungseingriff wird vorzugsweise nicht bei beliebig kleinen Durchmesserabweichungen vorgenommen, sondern nur dann, wenn die Durchmesserabweichung einen vorgebbaren Grenzwert (also eine zulässige Regelabweichung) übersteigt. Auf diese Weise können unnötige Regeleingriffe vermieden werden. Vorzugsweise wird die Hublänge und/oder Hublage jedes einzelnen Hubs auf Basis der unmittelbar vorher ermittelten Durchmesserabweichung berechnet.

Der Soll-Konturverlauf kann z.B. in Form einer analytischen Formel (zum Beispiel Geradengleichung oder Kurvengleichung) oder als Punktefeld vorgegeben werden.

Eine Regelungsstrategie ist vorzugsweise so programmiert, dass die Hublänge und/oder Hublage einer Hubbewegung in Abhängigkeit von der ermittelten Durchmesserabweichung derart verändert wird, dass durch eine Veränderung der Anzahl von Honüberdeckungen an der axialen Position die zu der axialen Position gehörende Durchmesserabweichung an der axialen Position wenigstens teilweise kompensiert wird. Der Begriff "Honüberdeckung" bezeichnet hierbei die Situation, in der ein Schneidstoffkörper unter einem bestimmten Anpressdruck über einen Oberflächenbereich läuft und dadurch Material abträgt. Bei ansonsten etwas gleichen Bedingungen (z.B. Schnittgeschwindigkeit, Anpressdruck) ist der Materialabtrag umso größer, je mehr Honüberdeckungen an einer Stelle stattfinden. Die Honüberdeckung kann auch als abtragende Hubwiederholung bezeichnet werden.

Ist beispielsweise der gemessene Ist-Durchmesser an einer bestimmten axialen Position zu groß (d.h. größer als der Soll-Durchmesser, der sich für die axiale Position aus dem Soll-Konturverlauf ergibt), so kann ein tendenziell größeres Inkrement einer Hublängenreduzierung eingestellt werden, damit nachfolgende Doppelhübe die Messstelle, also die axiale Position, für die eine Durchmesserabweichung festgestellt wurde, nicht mehr oder nur noch weniger häufig als ohne den Regelungseingriff erreichen, um dort kein weiteres Material oder nur möglichst wenig weiteres Material abzutragen. Andererseits kann ein Hubinkrement auch verringert werden, wenn der gemessene Durchmesser an einer axialen Position zu gering ist, so dass es in einem gemessenen Bereich mithilfe der nachfolgenden Hübe noch weiterbearbeitet werden kann.

Grundsätzlich besteht beispielsweise bei einer Bearbeitung mit inkrementell abnehmender Hublänge auch die Möglichkeit, dass sich die Hublänge von einem Doppelhub zum darauffolgenden Doppelhub zwischenzeitlich wieder verlängert, so dass keine schrittweise Abnahme der Hublänge erfolgt, sondern wenigstens phasenweise sogar eine Zunahme der Hublänge erfolgen kann. Es ist somit insbesondere möglich, dass ein Umsteuerpunkt zunächst mehrfach hintereinander schrittweise in eine Richtung verlagert wird und dann für einen oder wenige Hübe eine Verlagerung in die entgegengesetzte Richtung erfolgt.

Für den Soll-Ist-Vergleich gibt es unterschiedliche Möglichkeiten.

So können z.B. Durchmesserwerte an den Umkehrpunkten (an einem oder beiden) verglichen werden. Bei manchen Varianten ist dazu vorgesehen, dass die Messung des Ist-Durchmessers durchgeführt wird, wenn sich das Honwerkzeug im Bereich eines Umsteuerpunkts der Hubbewegung befindet. Dadurch kann erreicht werden, dass eine Messwerterfassung dann erfolgt, wenn eine möglichst geringe oder keine Axialgeschwindigkeit vorliegt. Dadurch wird eine genaue Zuordnung zwischen Durchmesser-Messwert und Hubposition erreicht. Außerdem kann die Messgenauigkeit unter diesen Bedingungen besonders hoch sein.

Die Messung kann so durchgeführt werden, dass sich das Honwerkzeug während der Durchmesser-Messung in einer axial schmalen Messzone im Bereich eines Umkehrpunkts dreht, so dass innerhalb der schmalen Messzone mehrere Durchmesser-Messwerte erfasst werden können. Vorzugsweise ist vorgehsehen, über mehrere kurz hintereinander erfasste Durchmesser-Messwerte zu mitteln, um einen mit geringem Messfehler behafteten gemittelten Durchmesser-Messwert für den axial schmalen Bereich des Umsteuerpunkts zu erhalten. Dieser wird dann für die Regelung genutzt.

Es ist auch möglich, die für den Soll-Ist-Vergleich und/oder für die Mittelwertbildung genutzten Durchmesser-Messsignale in einem Zwischenbereich zwischen den Umkehrpunkten zu erfassen, insbesondere in einem Mittelbereich zwischen den Umkehrpunkten. Messsignale, die für axiale Positionen im Bereich zwischen den Umkehrpunkten erfasst wurden, zeigen im Vergleich zu Messsignalen aus dem Bereich von Umkehrpunkten häufig einen beruhigteren bzw. gleichmäßigeren Verlauf, wodurch eine bessere Regelung ermöglicht wird. Es wird angenommen, dass ruhigere Messsignale vorliegen, da im Mittelbereich eine Hubbewegung mit mehr oder weniger konstanter Geschwindigkeit vorliegt, so die für die Mittelwertbildung genutzten Messsignale während einer "konstanten Fahrt" in Axialrichtung erfasst werden.

Es kann also auch in der Mitte der Bohrung oder an einer beliebigen anderen axialen Position gemessen und/oder verglichen werden. Dies liegt u.a. an der in dieser Anmeldung vorgestellten besonderen Vorgehensweise beim Erstellen der Kontur, bei der eine gewünschte axiale Kontur, d.h. der axiale Soll-Konturverlauf, in viele ineinander liegende virtuelle Zylinder aufgeteilt werden kann und bei der die aktuelle Bearbeitung sich stets auf einen zylindrischen Abschnitt der Bohrung bezieht.

Angesichts der begrenzten Genauigkeit des Inprozessmessens kann es vorteilhaft sein, eine möglichst große Mittelung der Messungen bzw. eine Mittelung über einen axial relativ großen Bereich vorzunehmen. Vorzugsweise erfolgt diese Mittelung über den gesamten aktuell in Bearbeitung befindlichen Abschnitt der Bohrung. Eine solche Mittelung ist zulässig, da man sich beim vorgestellten Verfahren mit der Bearbeitung stets in einem Zylinder bewegt. Durch eine möglichst große Mittelung kann die Konturgenauigkeit deutlich erhöht werden. Es wird vermutet, dass die verbesserte Präzision unter anderem darauf zurückzuführen ist, dass Messsignale, die über einen größeren axialen Bereich zwischen den Umkehrpunkten erfasst wurden, im Vergleich zu Messsignalen aus dem Bereich von Umkehrpunkten einen beruhigteren bzw. gleichmäßigeren Verlauf haben, wodurch eine bessere Regelung ermöglicht wird. Eine Messung "pro Hub" kann die wahren Verhältnisse besser wiedergeben, da alle Bohrungsbereiche in die "maßgebliche" Messwerterfassung einbezogen sind.

Die hier beschriebene automatische Konturregelung mit ihren unterschiedlichen optionalen Varianten kann in Kombination mit unterschiedlichen Honstrategien umgesetzt werden.

Es kann z.B. vorteilhaft sein, wenn der Honprozess so gefahren wird, dass eine kontinuierliche Zustellung von Schneidstoffkörpern des Honwerkzeugs während der Hubveränderungsphase erfolgt. Die kontinuierliche Zustellung kann z.B. mit konstantem Weg oder konstanter Kraft erfolgen. Die Zustellung kann insbesondere mit im Wesentlichen konstanter Zustellgeschwindigkeit gesteuert werden. Hierdurch kann sichergestellt werden, dass jegliche gemessenen Durchmesserabweichungen im Wesentlichen ausschließlich durch die geregelte Prozessgröße, nämlich eine eventuelle Änderung von Hublänge und/oder Hublage, adressiert wird. Dies kann dazu beitragen, den axialen Konturverlauf über die gesamte Länge der bearbeiteten Bohrung mit hoher Genauigkeit dem axialen Soll-Konturverlauf anzunähern.

Generell erlaubt das Honverfahren eine beliebige, dem Anwendungsfall entsprechende weggesteuerte oder kraftgesteuerte Zustellung.

Es ist möglich, den Honprozess so zu steuern, dass sich zusätzlich zur Hublänge und/oder Hublage auch die Andrückkraft von Schneidstoffkörpern auf die Bohrungsinnenwand in Abhängigkeit einer Leitgröße, beispielsweise in Abhängigkeit der axialen Position ändert. Vorzugsweise ist jedoch vorgesehen, dass eine Steuerung der auf das Honwerkzeug übertragenen Andrückkraft von Schneidstoffkörpern des Honwerkzeugs in der Weise erfolgt, dass die Andrückkraft während der Hubveränderungsphase im Wesentlichen konstant bleibt. Dadurch kann erreicht werden, dass die Ursache für die unterschiedlich starken Materialabträge im Wesentlichen nur durch unterschiedlich häufiges Überfahren von axialen Abschnitten mittels der Schneidstoffkörper, nicht aber durch Veränderung der Andrückkraft bestimmt wird. Damit kann einerseits erreicht werden, dass trotz des zu erzielenden axialen Konturverlaufs der Bohrung in Bereichen unterschiedlicher lokaler Durchmesser im Wesentlichen die gleiche Oberflächenqualität erzeugt wird, beispielsweise eine gleichmäßige Rauheit über den gesamten Bereich mit axialem Konturverlauf. Außerdem kann sichergestellt werden, dass jegliche Durchmesserabweichung von einem Soll-Durchmesser ausschließlich über gezielte Veränderung von Hublänge und/oder Hublage der Hubbewegung kompensiert wird und diese Regelung durch keine anderen Einflussgrößen (wie etwa variierenden Anpressdruck) konterkariert wird.

Bei dem Honverfahren wird zumindest bei derjenigen Honoperation, die die Hubveränderungsphase enthält, ein Honwerkzeug verwendet, das eine ringförmige Schneidgruppe mit mehreren den Umfang des Werkzeugkörpers verteilten, radial zustellbaren Schneidstoffkörpern aufweist, wobei die ringförmige Schneidgruppe in Axialrichtung relativ kurz ist. Beispielsweise können Honwerkzeuge verwendet werden, die in der WO 2014/146919 A1 offenbart sind. Der Offenbarungsgehalt dieses Dokuments wird insoweit zum Inhalt der vorliegenden Beschreibung gemacht.

Die axiale Länge der Schneidstoffkörper sollte vorzugsweise bei weniger als 50 %, insbesondere zwischen 10 % und 30 % des wirksamen Außendurchmessers der Schneidgruppe liegen. In absoluten Werten ausgedrückt kann die axiale Länge der Schneidstoffkörper beispielsweise im Bereich von 5 mm bis 90 mm liegen, insbesondere im Bereich von 10 mm bis 50 mm. Bezieht man die axiale Länge der Schneidstoffkörper auf die Bohrungslänge, so ist es in der Regel bevorzugt, wenn die axiale Länge bei weniger als 35 % der Bohrungslänge liegt, so dass die Schneidstoffkörper einen axialen Konturverlauf mit hoher Genauigkeit erzeugen können.

Um die In-Prozess/Messung während der Honbearbeitung durchführen zu können, ist an dem Honwerkzeug mindestens ein Messsensor eines Durchmessers-Messsystems angebracht. Insbesondere können Messdüsen eines pneumatischen Durchmesser-Messsystem am Honwerkzeug angebracht sein. Vorzugsweise sind die Messesensoren im axialen Bereich der Schneidstoffkörper angebracht, beispielweise etwa auf halber Höhe der axialen Länge der Schneidgruppe. Damit ist eine präzise Durchmesser-Messung in unmittelbarer Nähe des Orts des aktuellen Materialabtrags möglich, wodurch für die Regelung des Honprozess sehr präzise aktuelle Durchmesser (Ist-Durchmesserwerte) zur Verfügung stehen, die der zugehörigen axialen Position sehr genau zugeordnet werden können.

Das Honwerkzeug kann mit einfacher Aufweitung oder mit Doppelaufweitung (d.h. mit zwei unabhängig voneinander zustellbaren Untergruppen von Schneidstoffkörpern innerhalb einer ringförmigen Schneidgruppe) ausgestattet sein. Am Honwerkzeug können nicht-schneidende Führungsleisten zur Führung des Honwerkzeugs in der Bohrung vorgesehen sein. Die Führungsleisten können fest am Werkzeugkörper montiert oder separat von den Schneidstoffkörpern zustellbar sein (siehe z.B. DE 10 2014 212 941 A1).

Die Erfindung betrifft auch eine zur Durchführung des Honverfahrens konfigurierte Bearbeitungsmaschine. Es kann sich dabei um eine spezialisierte Honmaschine oder um eine andere Werkzeugmaschine handeln, die die hier benötigten Funktionalitäten bietet.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt schematisch einige Komponenten einer Honmaschine bei der Bearbeitung der Innenfläche eine Bohrungen mit axialem Konturverlauf;
Fig. 2 zeigt die Zerlegung eines konischen Bohrungsabschnitts in virtuelle Kreiszylinder;
Fig. 3 zeigt die Zerlegung eines Bohrungsabschnitts mit Freiform-Konturverlauf in virtuelle Kreiszylinder;
Fig. 4 zeigt ein Diagramm mit dem Verlauf verschiedener Prozessparameter während der Durchführung eines Honverfahrens gemäß einem Ausführungsbeispiel;
Fig. 5 und 6 zeigen Ausschnitte des Diagramms aus Fig. 4 in geänderter Darstellung.

### DETAILLIERTE BESCHREIBUNG DER AUSFÜHRUNGSBEISPIELE

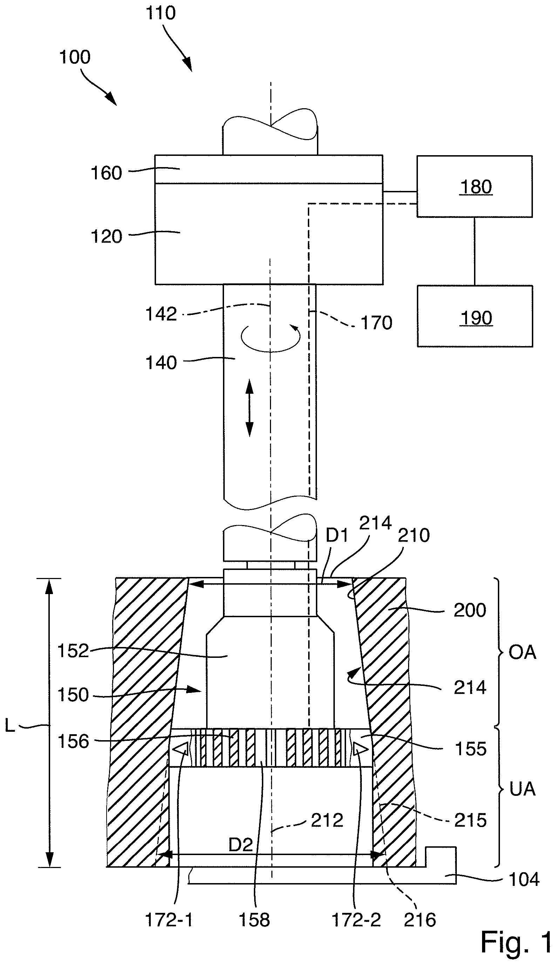

In Fig. 1 sind schematisch einige Komponenten einer Honmaschine 100 gezeigt, die im Rahmen verschiedener Ausführungsformen erfindungsgemäßer Verfahren zur Bearbeitung von Innenflächen von Bohrungen in Werkstücken als Bearbeitungsmaschine eingesetzt werden kann. Die Honmaschine kann so betrieben werden, dass damit einerseits eine oder mehrere herkömmliche Honoperationen an dem Werkstück durchgeführt werden können. Andererseits ist die Honmaschine auch dafür eingerichtet, am gleichen Werkstück auch Honverfahren gemäß Ausführungsformen der Erfindung durchzuführen.

Auf einem nicht näher dargestellten Werkstückträger der Honmaschine ist eine Werkstückhaltevorrichtung 104 montiert, die ein darauf aufgespanntes Werkstück 200 trägt. Bei dem Werkstück handelt es sich im Beispielsfall um einen Motorblock (Zylinderkurbelgehäuse) einer mehrzylindrigen Brennkraftmaschine. In dem Motorblock sind mehrere Bohrungen 210 mit generell vertikaler Ausrichtung ihrer Bohrungsachsen gebildet. Die Bohrungen werden auch als Zylinderbohrungen bezeichnet, auch wenn ihre Bohrungsform von der Form eines idealen Kreiszylinders signifikant abweicht. Bei dem hier beschriebenen Honverfahren wird mittels Honen eine in Bezug auf eine Bohrungsachse 212 rotationssymmetrische, von der Kreiszylinderform abweichende Bohrungsform mit einem axialen Konturverlauf erzeugt. Der Begriff "axialer Konturverlauf" bedeutet hier insbesondere, dass die Bohrung in unterschiedlichen axialen Positionen unterschiedliche Durchmesser hat. Die durch die Innenflächen 214 der Zylinderbohrungen gebildeten Zylinderlaufflächen werden mithilfe der Honmaschine einer qualitätsbestimmten Endbearbeitung unterzogen, wobei sowohl die Makroform der Zylinderlaufflächen (also die makroskopische Gestalt der Bohrung) als auch deren Oberflächentopographie durch geeignete Honoperationen erzeugt werden.

Die Soll-Form der Bohrung ist in Bezug auf ihre Bohrungsachse 212 rotationssymmetrisch und erstreckt sich über eine Bohrungslänge L von einem im Einbauzustand dem Zylinderkopf zugewandten Bohrungseintritt 214 bis zum Bohrungsaustritt 216 an gegenüberliegenden Ende. Die Bohrung soll im fertig gehonten Zustand eine im Wesentlichen konische bzw. kegelstumpfförmige Gestalt haben. Fig. 1 zeigt die Bohrung in einer Zwischenphase der Honbearbeitung, in welcher ein oberer Abschnitt OA bereits konisch gehont ist, der untere Abschnitt UA jedoch noch die kreiszylindrische Ausgangsform aufweist, die zu Beginn der Hubveränderungsphase vorlag.

Der Soll-Konturverlauf 215 der Bohrung ist im unteren, noch nicht bearbeiteten Abschnitt der Bohrung 210 mit gestrichelter Linie erkennbar. Der Soll-Durchmesser nimmt vom Bohrungseintritt zum Bohrungsende hin kontinuierlich linear zu. Der Konuswinkel (Winkel zwischen der Bohrungsachse und einer in einer Axialebene verlaufenden Mantellinie der Bohrung) kann z.B. im Bereich von weniger als 5° liegen, auch bei weniger als 1°, ggf. auch bei 0.2° oder darunter.

Der Durchmesserunterschied zwischen dem ersten Durchmesser D1 am Bohrungseintritt und dem zweiten Durchmesser D2 am eintrittsferneren Ende liegt deutlich außerhalb der für die konventionelle zylindrische Honbearbeitung typischen Toleranzen, die für eine Zylinderform in der Größenordnung von maximal 10 µm (bezogen auf den Durchmesser) liegen. Bei einem Absolutwert des Innendurchmessers in der Größenordnung zwischen 50 mm und 500 mm (letzteres z.B. bei Schiffsmotoren) kann der maximale Durchmesserunterschied beispielsweise zwischen 20 µm und 500 µm liegen.

Die Dimensionen können so optimiert sein, dass sich in typischen Betriebszuständen des Motors geringer Blow-by, geringer Ölverbrauch und geringer Verschleiß der Kolbenringe ergeben.

Die Honmaschine 100 weist mehrere Honeinheiten auf. In Fig. 1 sind einige Komponenten einer Honeinheit 110 schematisch dargestellt. Die Honeinheit umfasst einen an einer Trägerkonstruktion der Honmaschine befestigten Spindelkasten 120, in dem die als Werkzeugspindel der Bearbeitungsmaschine dienende Honspindel 140 drehbar gelagert ist. Die Honspindel lässt sich mithilfe eines am Spindelkasten befestigten Spindelantriebs um ihre Längsachse (Spindelachse) 142 drehen. Der Spindelantrieb weist einen Servomotor auf, der unter anderem bezüglich seiner Drehzahl und des erzeugten Drehmoments steuerbar ist.

Am unteren Ende der Honspindel ist eine Gelenkstange angebracht, an deren unteres, freies Ende das als Bearbeitungswerkzeug dienende Honwerkzeug 150 begrenzt beweglich mechanisch angekoppelt ist, zum Beispiel über eine Bajonettverbindung. Das Honwerkzeug kann ein integriertes Gelenk aufweisen, um eine begrenzte Beweglichkeit gegenüber der Gelenkstange zu ermöglichen.

Das Honwerkzeug ist besonders gut zur Bearbeitung von rotationssymmetrischen Bohrungen geeignet, die Bohrungsabschnitte unterschiedlicher Durchmesser und/oder unterschiedlicher Gestalt haben, beispielsweise flaschenförmigen Bohrungen, tonnenförmigen Bohrungen und/oder Bohrungen, die mindestens einen konusförmigen Bohrungsabschnitt mit axial kontinuierlich veränderlichem Durchmesser aufweisen. Das Honwerkzeug kann jedoch auch zur Bearbeitung von kreiszylindrischen Bohrungen, also rotationssymmetrischen Bohrungen ohne axialen Konturverlauf, genutzt werden.

Das Honwerkzeug hat einen aus einem Stahlwerkstoff gefertigten Werkzeugkörper 152, der eine Werkzeugachse definiert, die gleichzeitig die Rotationsachse des Honwerkzeugs während der Honbearbeitung ist. Am spindelseitigen Ende des Honwerkzeugs befindet sich eine Kupplungsstruktur zum Ankoppeln des Honwerkzeugs an eine Antriebsstange oder eine Arbeitsspindel einer Honmaschine

Am dem der Spindel abgewandten Endabschnitt des Werkzeugkörpers befindet sich eine einzige aufweitbare ringförmige Schneidgruppe 155 mit einer Vielzahl von um den Umfang des Werkzeugkörpers verteilten Schneidstoffkörpern 156, deren in Axialrichtung gemessene axiale Länge um ein Mehrfaches kleiner ist als der wirksame Außendurchmesser der Schneidgruppe 155 bei vollständig in Radialrichtung zurückgezogenen Schneidstoffkörpern. Die Schneidstoffkörper sind als in Umfangsrichtung schmale Schneidstoffleisten ausgebildet, deren in Umfangsrichtung gemessene Breite klein gegenüber der axialen Länge der Schneidstoffleisten ist. Ein Aspektverhältnis zwischen Länge und Breite kann beispielsweise im Bereich von 4:1 bis 20:1 liegen.

Das Honwerkzeug hat nur eine einzige ringförmige Schneidgruppe 135. Diese ist mehr oder weniger bündig mit dem spindelfernen Ende des Werkzeugkörpers angeordnet, so dass ggf. auch Sachlochbohrungen bis zum Bohrungsgrund bearbeitet werden können.

Die Schneidgruppe ist bzw. die Schneidstoffkörper der Schneidgruppe sind mittels eines der Schneidgruppe zugeordneten Zustellsystems radial zur Werkzeugachse zustellbar. Da diese für Honwerkzeuge typische Funktionalität an sich bekannt ist, werden die hierfür vorgesehenen Komponenten (beispielsweise Zustellstange(n), Aufweitkonus etc.) hier nicht näher beschrieben.

Das Honwerkzeug kann mit einfacher Aufweitung oder Doppelaufweitung ausgestattet sein. Bei einer einfachen Aufweitung werden alle Schneidstoffkörper der Schneidgruppe gemeinsam radial zugestellt. Im Falle der Doppelaufweitung hat die Schneidgruppe zwei Untergruppen von Schneidstoffkörpern, die separat voneinander zugestellt werden können. Die Schneidstoffkörper der Untergruppen können z.B. unterschiedlich feine oder grobe Körnung aufweisen, so dass z.B. nach einer Vorhonoperation mittels einer ersten Untergruppe gröberer Schneidstoffkörper ohne Werkzeugwechsel eine Fertighonstufe mit den Schneidstoffkörpern der zweiten Untergruppe durchgeführt werden kann.

Die aufweitbare ringförmige Schneidgruppe 130 umfasst mehrere radial zustellbare Schneidstoffkörper-Träger 158, die jeweils einen Umfangswinkelbereich abdecken, der größer ist als die axiale Länge der Schneidstoffkörper bzw. der Schneidgruppe. Im Beispielsfall von Fig. 1 sind sechs Schneidstoffkörper-Träger vorgesehen, die jeweils einen Umfangswinkelbereich von zwischen 45° und 60° abdecken und gleichmäßig über den Umfang des Honwerkzeugs angeordnet sind. Jeder der Schneidstoffkörper-Träger trägt zwei, drei, vier oder mehr einzelne Schneidstoffkörper 156 in Form relativ schmaler Honleisten.

Ein Hubantrieb 160 der Honmaschine ist dafür vorgesehen, Vertikalbewegungen der Honspindel parallel zur Spindelachse 142 zu verursachen. Der Hubantrieb bewirkt beispielsweise die Vertikalbewegung der Honspindel beim Einführen des Honwerkzeugs in das Werkstück bzw. beim Herausziehen aus dem Werkstück. Während der Honbearbeitung wird der Hubantrieb so angesteuert, dass das Honwerkzeug innerhalb der Bohrung 210 des Werkstücks eine oszillierende Hubbewegung, also eine Hin- und Her-Bewegung im Wesentlichen parallel zur Spindelachse ausführt.

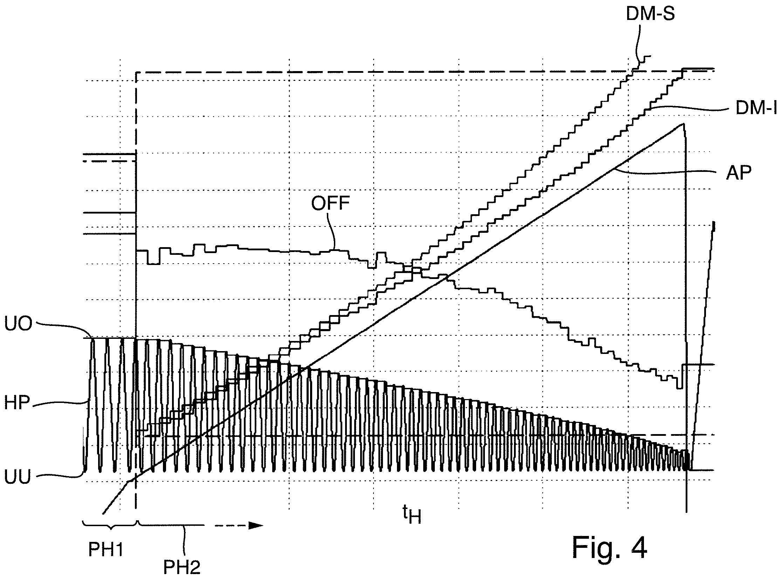

Die Hubbewegung kann durch unterschiedliche Parameter charakterisiert werden. Die Hublänge entspricht dabei dem axialen Abstand zwischen einem oberen Umsteuerpunkt UO und einem unteren Umsteuerpunkt UU der Hubbewegung (vgl. Fig. 4). Der obere Umsteuerpunkt ist dabei derjenige Umsteuerpunkt, der dem Bohrungseintritt näher ist, der untere Umsteuerpunkt ist der eintrittsferne Umsteuerpunkt. Die Hubbewegung kann auch durch die "Hublage" charakterisiert werden. Der Begriff "Hublage" bezeichnet hierbei den Bereich zwischen dem oberen Umsteuerpunkt einer Hubbewegung (in der Nähe des Bohrungseintritts) und dem unteren Umsteuerpunkt der Hubbewegung (näher am eintrittsfernen Ende der Bohrung) bezogen auf ein maschinenfestes Koordinatensystem. Jede axiale Verlagerung wenigstens eines der Umsteuerpunkte ändert somit die Hublage. In der Regel wird auch die Hublänge geändert, zum Beispiel wenn die axiale Position eines der Umsteuerpunkte unverändert bleibt und nur die axiale Position des anderen Umsteuerpunkts verändert wird.

Die Honmaschine ist mit einem Zustellsystem ausgestattet, das es erlaubt, den wirksamen Durchmesser des Honwerkzeugs (also den Außendurchmesser der Schneidgruppe) durch Zustellung von am Honwerkzeug angebrachten Schneidstoffkörpern 156 in Radialrichtung zu verändern. Diese Aufweitung kann beispielsweise mittels eines Servomotors - kraftgesteuert oder weggesteuert - realisiert werden. Es ist auch eine hydraulische Zustellung möglich. Es kann ein Zustellsystem mit einfacher Zustellung oder mit Doppelzustellung vorgesehen sein. Da solche Zustellsysteme an sich bekannt sind, wird hier auf eine eingehende Beschreibung verzichtet.

Die Honmaschine 100 ist weiterhin mit einem Durchmesser-Messsystem 170 zur Messung des Ist-Durchmessers der Bohrung in vorgebbaren Messebenen oder Messzonen während der Honbearbeitung (In-Prozess-Messung) ausgestattet. Am Honwerkzeug 150 sind dazu Messsensoren des Durchmesser-Messsystems angebracht. Im Beispielsfall ist das Durchmesser-Messsystem als pneumatisches Durchmesser-Messsystem (Luftmesssystem) ausgelegt. Entsprechend weist das Honwerkzeug an zwei diametral einander gegenüberliegenden Positionen zwischen benachbarten Schneidstoffkörpern jeweils eine Messdüse 172-1, 172-2 des Durchmesser-Messsystems auf. Aufgrund der Anordnung der Messdüsen im axialen Bereich der Schneidstoffkörper, zum Beispiel auf halber Höhe mittig in der schmalen Zone des mit Schneidstoffkörpern besetzten Rings, ist eine sehr exakte Durchmessermessung des gerade bearbeiteten Bohrungsabschnitts möglich.

Das Durchmesser-Messsystem kann nach dem Düse-Prallplatte-Prinzip arbeiten. Dabei wird für die Messung Druckluft aus den Messdüsen in Richtung Bohrungswandung bzw. Innenfläche 2014 geblasen. Der sich ergebende Staudruck im Bereich der Messdüsen kann als Maß für den Abstand der Messdüse zur Bohrungswandung dienen. Ein mit der Messdüse über eine Druckleitung verbundener Messwandler sorgt für die Umwandlung des (pneumatischen) Drucksignals in ein elektrisch weiter verarbeitbares Spannungssignal, das hier als Durchmesser-Messsignal bezeichnet wird. Anstelle des Staudrucks kann auch der Volumenstrom der Druckluft zur Auswertung genutzt werden. Auch nach anderen Prinzipien arbeitende Durchmesser-Messsysteme, beispielsweise kapazitive Messsysteme oder induktive Messsysteme oder Messsysteme mit Radar-Sensoren (vgl. zum Beispiel DE 10 2010 011 470 A1) sind grundsätzlich verwendbar.

Der Spindelantrieb, der Hubantrieb, der mindestens eine Antrieb des Zustellsystems sowie der Wandler des Durchmesser-Messsystems sind an eine Steuereinrichtung 180 angeschlossen, die ein funktionaler Bestandteil der Maschinensteuerung ist und über eine Bedieneinrichtung 190 bedient werden kann. Über die Bedieneinrichtung können von einem Maschinenbediener zahlreiche zur Definition des Honprozesses erforderliche Prozessparameter eingestellt werden.

Unter anderem kann vor Beginn der Honoperation ein axialer Soll-Konturverlauf vorgegeben werden, der die Abhängigkeit des Soll-Durchmessers von der axialen Hubposition in der zu bearbeitenden Bohrung repräsentiert. Die Vorgabe des Soll-Konturverlaufs, also die Vorgabe der Konturhonung, kann beispielsweise durch die Definition der Kontur als analytische Formel (zum Beispiel Geradengleichung oder Kurvengleichung) oder als Punktefeld (zur Generierung von Freiformkurven) erfolgen.

Die Honmaschine kann zur Erzeugung eines bestimmten axialen Konturverlaufs an der Bohrung so programmiert werden, dass in mindestens einer Hubveränderungsphase über eine gezielte Veränderung der Hublänge und/oder der Hublage des Honwerkzeugs gezielt ein axial variierender Materialabtrag erzeugt werden kann, um auf diese Weise mit hoher Genauigkeit Vorgaben hinsichtlich des axialen Konturverlaufs zu erreichen.

Dazu wird während einer Hubveränderungsphase nach Maßgabe einer vorgebbaren Messbedingung eine Messung des Ist-Durchmessers der Bohrung durchgeführt, um ein Durchmesser-Messsignal zu ermitteln, welches dem Ist-Durchmesser der Bohrung in derjenigen Messebene oder schmalen Messzone entspricht, in der die Messung durchgeführt wurde. Die Hublänge und/oder Hublage der Hubbewegung werden dann in Abhängigkeit von dem Durchmesser-Messsignal variabel gesteuert. Auf diese Weise kann ein geregelter Konturhonprozess realisiert werden. Nachfolgend werden beispielhaft einige Grundüberlegungen und technischen Maßnahmen zur Umsetzung dieses Prinzips anhand von instruktiven Ausführungsbeispielen erläutert.

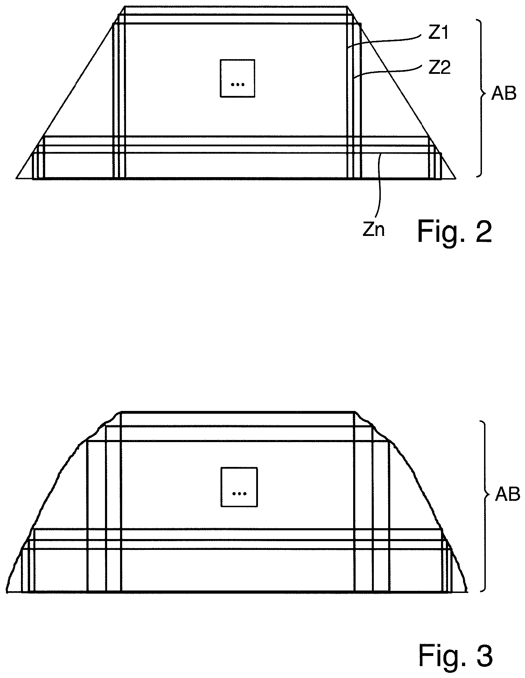

Ein Problem vieler heute verfügbarer In-Prozess-Messsysteme besteht darin, dass sie keine ausreichende Dynamik aufweisen, um nicht-zylindrische Bohrungen, insbesondere solche mit axialem Konturverlauf, mit ausreichend hoher Genauigkeit vermessen zu können. Das Problem der In-Prozess-Messung einer nicht-zylindrischen Bohrung kann dadurch gelöst werden, dass eine gewünschte axiale Kontur, d.h. der axiale Soll-Konturverlauf, in viele ineinander liegende virtuelle Zylinder aufgeteilt wird. Die Fig. 2 zeigt dieses Konzept schematisch. Fig. 2 zeigt einen konischen Abschnitt AB einer Bohrung, also einen axialen Bohrungsabschnitt, in welchem sich der Durchmesser in Axialrichtung AX gemäß einer linearen Funktion ändert. Oben und/oder unten können sich weitere Bohrungsabschnitte anschließen. Es ist auch möglich, dass der Abschnitt AB die gesamte Bohrungslänge umfasst, so dass die Bohrung insgesamt rein konisch ist.

Es ist gezeigt, wie diese rotationssymmetrische, aber nicht-kreiszylindrische Bohrungsform virtuell in eine Vielzahl von Kreiszylindern Z1, Z2,..., Zₙ unterschiedlichen Höhe und unterschiedlicher Durchmesser aufgeteilt werden kann. Es ist somit nie eine nicht-zylindrische Bohrung zu messen, obwohl am Ende des Honprozesses eine solche erzeugt wird. Die Konturhonung mittels Hubveränderung kann somit als eine Serie von klassischen zylindrischen verketteten Honbearbeitungen gedacht werden.

Bei einer Ausführungsform wird eine solche Bearbeitung dadurch realisiert, dass die axiale Position des unteren Umsteuerpunkts UU der Hubbewegung aufeinanderfolgender Doppelhübe fixiert bzw. unverändert bleibt, während der obere Umsteuerpunkt UO dynamisch in Richtung des unteren Umsteuerpunkts schrittweise (inkrementell) verlagert wird. Im dargestellten Beispielsfall einer sich nach unten öffnenden Kontur kann der untere Umsteuerpunkt fix bleiben und der obere Umsteuerpunkt verkürzt sich dynamisch.

Allerdings sind bei dem Honverfahren die sich dadurch ergebenden ineinander liegenden Zylinder hinsichtlich ihres Durchmessers und der axialen Position des oberen Endes nicht fest vorbestimmt, sondern werden nach jedem Hub entsprechend dem aktuellen Messergebnis der Durchmesser-Messung dynamisch aufs Neue durch Berechnungen innerhalb der Steuereinrichtung 190 bestimmt und entsprechend mithilfe des Hubantriebs eingestellt.

Dies geschieht durch Bestimmung der bestangepassten Verkürzung des dynamisch zu verändernden oberen Umsteuerpunkts UO entsprechend der durch den Maschinenbediener vorgegebenen Kontur.

Vor Beginn der Honoperation, in der ein axialer Konturverlauf erzeugt werden soll, wird ein axialer Soll-Konturverlauf vorgegeben, der die Abhängigkeit des Soll-Durchmessers der Bohrung von der axialen Hubposition repräsentiert. Bei einer reinen Konusform einer Bohrung vorgegebenen Bohrungslänge kann es ausreichen, nur den Durchmesserunterschied zwischen dem Durchmesser am oberen Ende (relativ kleinerer Soll-Durchmesser) und dem Durchmesser am unteren Ende (relativ größter Soll-Durchmesser) einzugeben. Daraus kann die Steuerung eine Geradengleichung errechnen, die den Soll-Konturverlauf repräsentiert.

Die Vorgabe des Soll-Konturverlaufs, also die Vorgabe der Konturhonung, kann im Allgemeinen z.B. durch die Definition der Kontur als analytische Formel (zum Beispiel Geradengleichung oder Kurvengleichung) oder als Punktefeld erfolgen, das den Zusammenhang zwischen Hubposition und gewünschtem Konturmaß beschreibt. Im einfachen Fall eines rein konischen Abschnitts der Bohrung kann der Soll-Konturverlauf durch eine Gerade angegeben werden. Komplexere Fälle können durch entsprechend kompliziertere analytische Formeln wie beispielsweise Kurvengleichungen oder durch ein Punktefeld angegeben werden, wobei zwischen den Punkten gegebenenfalls interpoliert wird. Die Fig. 3 zeigt ein Beispiel eines solchen Abschnitts AB, bei dem sich der Durchmesser vom oben liegenden kleinsten Durchmesser bis zum unten liegenden größten Durchmesser nicht linear, sondern gemäß einer gekrümmten Kurve verändert, wobei die Zunahme des Durchmessers pro axialem Inkrement vom kleinsten Durchmesser zum größten Durchmesser hin kontinuierlich abnimmt, so dass sich eine nach radial außen gewölbte Kontur ergibt.

Bei einem Hub wird dann der bei einer vorgebbaren Hubposition gemessene Ist-Durchmesser mit dem zu der Hubposition gehörenden Soll-Durchmesser des Soll-Konturverlaufs in einer Vergleichsoperation verglichen. Aus dem Ergebnis der Vergleichsoperation wird eine Durchmesserabweichung für die Hubposition ermittelt. Die Hublänge und/oder Hublage eines nachfolgenden Hubs wird dann in Abhängigkeit von der Durchmesserabweichung relativ zu einer Soll-Hublänge und/oder Soll-Hublage entsprechend des Soll-Konturverlaufs verändert.

Ein Regeleingriff im Sinne einer Veränderung der Hubparameter erfolgt in der Regel nur dann, wenn die Durchmesserabweichung einen vorgebbaren Grenzwert übersteigt, um Regeleingriffe nur dann zu erzeugen, wenn signifikante Durchmesserabweichungen ermittelt werden sind.

Die Steuerung wird dann besonders einfach, wenn ein zu honender Abschnitt so gewählt ist, dass sich der Durchmesser innerhalb des Abschnitts kontinuierlich in eine Richtung verändert, also kontinuierlich verkleinert oder vergrößert. In jedem dieser Fälle kann für den Abschnitt die Hubveränderung so programmiert werden, dass einer der Umkehrpunkte, nämlich der zum größeren Durchmesser gehörende Umkehrpunkt, fixiert bleibt, während sich der andere Umkehrpunkt (näher am engeren Ende) auf den fixierten Umkehrpunkt schrittweise mit variabler Schrittgröße zubewegt.

Sofern in einer zu honenden Bohrung der axiale Konturverlauf nicht über seine komplette Länge als Abschnitt beschrieben werden kann, bei dem sich der Durchmesser kontinuierlich immer in die gleiche Richtung (Verkleinerung oder Vergrößerung) zwischen einem Extremwert und einem anderen Extremwert ändert, kann zum Zwecke der Steuerung die Bohrung in mehrere Abschnitte unterteilt werden, für die dann diese Voraussetzungen wieder gelten. Diese können dann nach dem beschriebenen Verfahren sequenziell abgearbeitet werden. Ein Spezialfall liegt beispielsweise vor, wenn es zwei solcher Abschnitte gibt und einer der Abschnitte im Durchmesser nach unten größer und der untere Abschnitt nach oben größer wird. In diesem Fall können beide Umsteuerpunkte oben und unten simultan entsprechend der aktuellen Messergebnisse und der vorgegebenen Profilkurve (axialer Soll-Konturverlauf) verkürzt werden.

Anhand von Fig. 4 wird nun anhand eines konkreten Beispiels eine Honoperation erläutert, mit der im Rahmen eines Versuchs eine Bohrung mit einem rein konischen Konturverlauf erzeugt wurde. Bei der hier dokumentierten Honoperation wurde der gewünschte axiale Konturverlauf ausgehend von einer kreiszylindrischen Bohrungsform erzeugt, die vorab zum Beispiel durch Langhubhonen mit relativ langen Honleisten erzeugt wurde.

Bei den Versuchen wurden verschiedene hier relevante Prozessparameter mithilfe eines Systems zur Diagnose von Maschinenparametern erfasst und die Ergebnisse ausgewertet. Fig. 4 zeigt beispielhaft ein daraus resultierendes Diagramm, in welchem auf der x-Achse die Honzeit t_{H} (in Sekunden) der Honoperation und auf der y-Achse in gemeinsamer Auftragung verschiedene davon abhängige Parameter dargestellt sind.
- Kurve HP repräsentiert die Hubposition des Honwerkzeugs, also die Position in Axialrichtung. Die Hübe verlaufen jeweils zwischen einem unteren Umsteuerpunkt UU und einem oberen Umsteuerpunkt UO;
- Kurve AP repräsentiert die durch radiale Zustellung der Schneidstoffkörper sich verändernde Aufweitposition AP
- Kurve DM-I repräsentiert die Durchmesser-Messwerte der In-Prozess-Durchmesser-Messung
- Kurve DM-S repräsentiert die Soll-Durchmesser, also diejenigen Durchmesserwerte, die im Soll-Konturverlauf an der entsprechenden Hupposition bzw. zur entsprechenden Honzeit vorliegen;
- Kurve OFF repräsentiert die aus dem Durchmesservergleich resultierende Korrektur des Hubinkrements, also einen Wert, der zu einem auf Basis des Soll-Konturverlaufs vorgegebenen Hub-Inkrement hinzuaddiert oder von diesem abgezogen wird. Am irregulären Verlauf dieser Kurve werden die Regeleingriffe besonders gut sichtbar.

Bei der gezeigten Honoperation wurde die Drehzahl der Honspindel in einer Anfangsphase auf einen Soll-Wert heraufgefahren und blieb dann während der gesamten Honoperation im Wesentlichen konstant. Die Hubsteuerung wurde so eingestellt, dass in einer anfänglichen ersten Honphase PH1 die Hublänge (axialer Abstand zwischen oberem und unterem Umsteuerpunkt) so groß war, dass das Honwerkzeug die gesamte Bohrungslänge zwischen Bohrungseintritt und Bohrungsaustritt mithilfe der ringförmigen Schneidgruppe mittels weniger kompletter Doppelhübe bearbeitet. Die axiale Position des oberen Umsteuerpunkts UO und des unteren Umsteuerpunkts UU blieben dabei über mehrere Doppelhübe konstant.

Die darauffolgende zweite Honphase PH1 wird hier als Hubveränderungsphase bezeichnet, da sich in dieser zweiten Honphase die Hublage des Honwerkzeugs und/oder die Hublänge von Hub zu Hub ändern bzw. ändern können. Der Begriff "Hublage" bezeichnet hierbei den Bereich zwischen dem oberen Umsteuerpunkt UO einer Hubbewegung (in der Nähe des Bohrungseintritts) und dem unteren Umsteuerpunkt UU der Hubbewegung näher am eintrittsfernen Enden der Bohrung, bezogen jeweils auf ein maschinenfestes Koordinatensystem. Jede axiale Verlagerung der Lage eines Umsteuerpunkts ändert somit auch die Hublage. Im Beispielsfall von Fig. 4 wurde die axiale Position des unteren Umsteuerpunkts UU über die komplette zweite Honphase PH2 konstant gehalten, während die axiale Position des oberen Umsteuerpunkts UO als Funktion des Durchmesser-Messsignals (DM-I) durch die Steuereinrichtung 190 variabel gesteuert wurde.

Dabei ist die allgemeine Tendenz des zeitlichen Verlaufs des oberen Umsteuerpunkts so, dass dessen axiale Position sich über die Honzeit schrittweise dem unteren Umsteuerpunkt nähert, so dass die Hublänge von Hub zu Hub schrittweise reduziert wurde. Auf diese Weise wird der eintrittsfernere Abschnitt der Bohrung mit mehr Hüben bearbeitet als der eintrittsnähere Abschnitt, so dass im eintrittsferneren Abschnitt mehrere Honüberdeckungen stattfinden und somit mehr Material abgetragen wird als im eintrittsnäheren Bereich.

Eine Besonderheit des Verfahrens besteht nun darin, dass das Ausmaß der Hubverkürzung zwischen aufeinanderfolgenden Hüben, bzw. etwas allgemeiner ausgedrückt: die absolute Größe des Hubinkrements, nicht fest vorgegeben ist, sondern als Funktion der Ergebnisse der In-Prozess-Durchmesser-Messung variieren kann.

Für die Durchmesser-Messung wurden jeweils diejenigen Durchmesser-Messwerte im Verlauf eines Hubs ausgewählt, die erfasst wurden, wenn sich das Honwerkzeug am oberen Umsteuerpunkt UO oder in dessen Nähe befand. Unter diesen Bedingungen wird der für die Regelung genutzte Durchmesser-Messwert in einer Phase sehr geringer Axialgeschwindigkeit des Honwerkzeugs erfasst, so dass sich die Messsensoren (Luftmessdüsen) über einen längeren Zeitraum im Wesentlichen im gleichen axialen Abschnitt bzw. in einer axial schmalen Messzone der Bohrung befinden und somit der dort vorliegende Durchmesser mit hoher Genauigkeit (ggf. mit Mittelwertbildung) bestimmt werden kann. Die axiale Ausdehnung der Messszone kann z.B. 10 mm oder weniger betragen und insbesondere im Bereich von 3 mm bis 8 mm liegen.

Aus dem Verlauf der Aufweitposition AP ist ersichtlich, dass bei diesem Ausführungsbeispiel mit konstanter Aufweitung, d.h. mit konstanter Zustellgeschwindigkeit, gefahren wurde, so dass als einzige der dargestellten Prozessgrößen die axiale Position des oberen Umsteuerpunkts in Abhängigkeit von der Durchmesser-Messung variierte.

Die Honoperation wird beendet, wenn die Durchmesser-Messung anzeigt, dass der angestrebte Konturverlauf im Rahmen der Toleranzen erreicht ist. Die Abschaltung erfolgt also in Abhängigkeit von der In-Prozess-Messung.

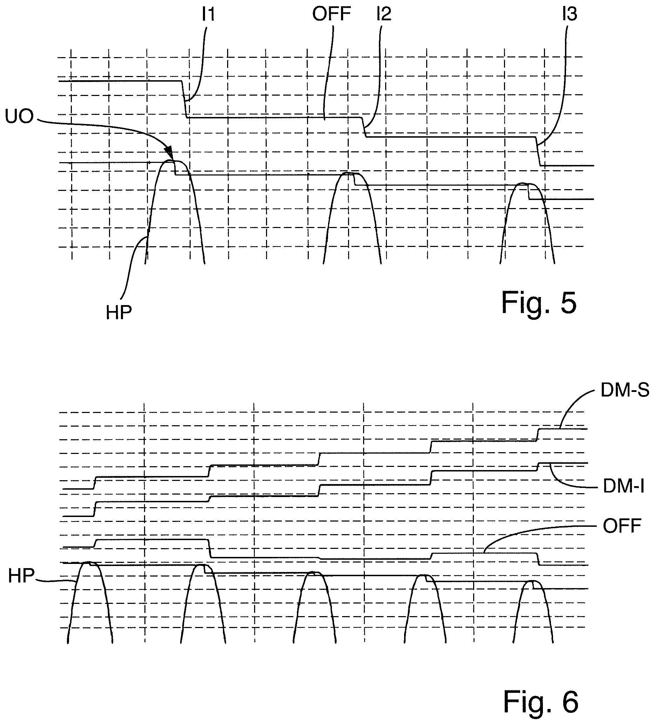

Zur besseren Veranschaulichung der Regelungsvorgänge sind in den Fig. 5 und 6 Ausschnitte des Diagramms von Fig. 4 über wenige Doppelhübe in etwas anderer Darstellung gezeigt.

In dem Diagramm von Fig. 5 ist besonders anschaulich erkennbar, dass der aus dem Durchmesservergleich resultierende Korrekturwert für das Hubinkrement (Kurve OFF) von einem oberen Umkehrpunkt UO zum nächsten (unmittelbar folgenden) oberen Umkehrpunkt deutlich unterschiedliche Werte annehmen kann. Der erste Korrekturwert l1 am links gezeigten Doppelhub hat etwa die doppelte Größe wie der Korrekturwert l2 des unmittelbar darauffolgenden, mittleren Doppelhubs, während der darauffolgende dritte Korrekturwert I3 einen Absolutwert hat, der zwischen denjenigen Absolutwerten der beiden vorangegangenen Korrekturwerte liegt. Dadurch wird deutlich, dass die tatsächlich realisierten Hubinkremente, die im Beispielsfall einer Hubverkürzung (Verlagerung des oberen Umsteuerpunkts in Richtung des unteren Umsteuerpunkts) führen, von Doppelhub zu Doppelhub als Funktion der Durchmesser-Messung variieren können. Die stufige Kurve, die die oberen Umsteuerpunkte aufeinanderfolgende Doppelhübe verbindet, veranschaulicht die resultierende Hubverlagerung, also die Verkürzung der Hublänge von Hub zu Hub. Der Absolutwert dieser Verlagerung ergibt sich durch Summenbildung aus dem Absolutwert der Hubverlagerung, der sich aus der Berechnung auf Basis des Soll-Konturverlauf ergibt, und dem Korrekturwert, also dem darüber gezeigten Wert der Kurve OFF (Offset-Wert).

In Fig. 6 sind zusätzlich zu den beiden oben genannten Kurven auf einem anderem Bereich der Hubveränderungsphase der Sollwert der Durchmesser-Messung (DM-S) sowie der Durchmesser-Istwert (DM-I), also das Ergebnis der aktuellen Durchmesser-Messung, im Bereich des jeweiligen oberen Umsteuerpunkts der Hubbewegung dargestellt. Der Vergleich der beiden oberen Kurven DM-S und DM-I zeigt anschaulich, dass der Sollwert DM-S entsprechend dem linearen Verlaufs der schrägen Kontur des Konus von Hub zu Hub um den gleichen Betrag zunehmen sollte. Dies entspricht dem linearen Verlauf der Kontur eines Konus, der z.B. durch eine Geradengleichung parametrisiert sein kann. Die darunter dargestellte Kurve der Ist-Durchmesserwerte DM-I hat dagegen unterschiedlich hohe Stufen. Diese belegt, dass es lokale unterschiedlich große Unterschiede zwischen der Soll-Kontur und der gemessenen Ist-Kontur gibt. Die Kurve OFF repräsentiert die aus einer Vergleichsoperation der Durchmesser-Werte resultierenden Korrekturwerte, die dazu führen, dass im Wege der Regelung korrigierend in den Honprozess in der Weise eingegriffen wird, dass sich möglichst präzise der gewünschte Konturverlauf ergibt. An der Kurve OFF ist dabei auch ersichtlich, dass die Korrekturwerte, die zu einem Sollwert der Hubverlagerung addiert werden, sowohl positive als auch negative Werte annehmen können, so dass die Absolutgrößen der Hubinkremente zwischen aufeinanderfolgenden Hüben sowohl kleiner als auch größer als die bei einem idealen Konturverlauf zu erwartenden Hubinkremente sein können.

Diese feinfühlige Regelung der Hublängen während der Hubveränderungsphase führt zu einem axialen Konturverlauf, der über die gesamte Bohrungslänge mit hoher Genauigkeit (innerhalb eines Bereichs von wenigen Mikrometern) mit dem Soll-Konturverlauf übereinstimmte.

Es gibt mehrere Möglichkeiten der Umsetzung des Konzepts der Regelung. Die hier ausführlicher beschriebene Variante sieht eine feste Vorgabe von Soll-Hubverkürzungen (entsprechend dem Soll-Konturverlauf) und eine Korrektur zur Ermittlung der tatsächlich im Prozess realisierten bzw. eingestellten Hubverkürzungen über den Offset bzw. Korrekturwert gemäß dem aktuellem Messergebnis vor. Möglich ist z.B. auch eine Berechnung der Hubverkürzung gemäß Abtrag und Konturvorgabe ohne Soll-Hubverkürzung.

## Patentansprüche

1. Honverfahren zur Bearbeitung der Innenfläche einer Bohrung in einem Werkstück mithilfe mindestens einer Honoperation, insbesondere zum Honen von Zylinderlaufflächen bei der Herstellung von Zylinderblöcken oder Zylinderlaufbuchsen für Hubkolbenmaschinen, worin
während einer Honoperation ein an eine Spindel angekoppeltes, aufweitbares Honwerkzeug innerhalb der Bohrung zur Erzeugung einer Hubbewegung in Axialrichtung der Bohrung hin und her bewegt und gleichzeitig zur Erzeugung einer der Hubbewegung überlagerten Drehbewegung gedreht wird,
eine in Bezug auf eine Bohrungsachse rotationssymmetrische, von der Kreiszylinderform abweichende Bohrungsform mit einem axialen Konturverlauf erzeugt wird, und
zur Erzeugung eines axial variierenden Materialabtrags in mindestens einer Hubveränderungsphase eine Hublänge und/oder eine Hublage der Hubbewegung verändert wird,
ein Honwerkzeug (150) verwendet wird, das eine ringförmige Schneidgruppe (155) mit mehreren um den Umfang eines Werkzeugkörpers (152) verteilten, radial zustellbaren Schneidstoffkörpern (156) aufweist,
während der Hubveränderungsphase eine Messung des Ist-Durchmessers der Bohrung zur Ermittlung eines Durchmesser-Messsignals durchgeführt wird, das den Ist-Durchmesser der Bohrung in einer Messebene repräsentiert, und
die Hublänge und/oder die Hublage der Hubbewegung in Abhängigkeit von dem Durchmesser-Messsignal gesteuert wird.
**dadurch gekennzeichnet, dass**
zur Ermittlung des Durchmesser-Messsignals eine Messwerterfassung über einen gleitenden Mittelwert erfolgt, wobei der gleitende Mittelwert in einem Abschnitt der Bohrung oder über den gesamten gerade bearbeiteten Abschnitt der Bohrung ermittelt wird.

2. Honverfahren nach Anspruch 1, **dadurch gekennzeichnet, dass** die Hubbewegung eine Vielzahl von aufeinander folgenden Hüben umfasst, die jeweils zwischen einem unteren Umsteuerpunkt (UU) und einem oberen Umsteuerpunkt (UO) verlaufen, und dass die axiale Position wenigstens eines der Umsteuerpunkte eines Hubes in Abhängigkeit eines bei einem vorhergehenden Hub ermittelten Durchmesser-Messsignals dynamisch verändert wird,
wobei vorzugsweise die axiale Position eines der Umsteuerpunkte fixiert wird und nur die axiale Position des anderen Umsteuerpunkts in Abhängigkeit von dem Durchmesser-Messsignal dynamisch variiert wird,
wobei insbesondere der axiale Konturverlauf einen Abschnitt aufweist, in welchem sich der Soll-Durchmesser zwischen einer ersten axialen Position mit einem innerhalb des Abschnitts kleinsten Durchmesser und einer zweiten axialen Position mit einem größten Durchmesser innerhalb des Abschnitts kontinuierlich vergrößert, wobei der zu der zweiten axialen Position gehörende Umsteuerpunkt fixiert wird und die axiale Position des anderen Umsteuerpunkts in Abhängigkeit von dem Durchmesser-Messsignal dynamisch variiert wird.

3. Honverfahren nach einem der vorhergehenden Ansprüche, **dadurch gekennzeichnet, dass** vor Beginn der Honoperation ein axialer Soll-Konturverlauf vorgegeben wird, der die Abhängigkeit eines Soll-Durchmessers von der axialen Hubposition repräsentiert, dass bei einem Hub der bei einer Hubposition gemessene Ist-Durchmesser mit dem zu der Hubposition gehörenden Soll-Durchmesser verglichen und aus dem Vergleich eine Durchmesserabweichung für die Hubposition ermittelt wird und dass die Hublänge und/oder die Hublage eines nachfolgenden Hubes in Abhängigkeit von der Durchmesserabweichung gegenüber einer Soll-Hublänge und/oder Soll-Hublage verändert wird,
wobei vorzugsweise die Hublänge und/oder Hublage der Hubbewegung in Abhängigkeit von der ermittelten Durchmesserabweichung derart verändert wird, dass durch eine Veränderung der Anzahl von Honüberdeckungen an der axialen Position die Durchmesserabweichung an der axialen Position wenigstens teilweise kompensiert wird

4. Honverfahren nach Anspruch 3, **dadurch gekennzeichnet, dass** durch Veränderung der Hublänge und/oder Hublage der Hubbewegung eine Reduzierung einer Anzahl von Honüberdeckungen an einer axialen Position erzeugt wird, wenn die Durchmesserabweichung einen im Vergleich zum Soll-Durchmesser zu großen Ist-Durchmesser ergibt und dass durch Veränderung der Hublänge und/oder Hublage der Hubbewegung eine Erhöhung einer Anzahl von Honüberdeckungen an einer axialen Position erzeugt wird, wenn die Durchmesserabweichung einen im Vergleich zum Soll-Durchmesser zu kleinen Ist-Durchmesser ergibt.

5. Honverfahren nach einem der vorhergehenden Ansprüche, **dadurch gekennzeichnet, dass** bei der Messwerterfassung über einen gleitenden Mittelwert die Messwerterfassung über eine einstellbare Menge von Messpunkten erfolgt.

6. Honverfahren nach einem der vorhergehenden Ansprüche, **dadurch gekennzeichnet, dass** die Messung des Ist-Durchmessers durchgeführt wird, wenn sich das Honwerkzeug im Bereich eines Umsteuerpunkts der Hubbewegung befindet,
wobei die Durchmesser-Messung so durchgeführt wird, dass sich das Honwerkzeug während der Durchmesser-Messung in einer axial schmalen Messzone im Bereich eines Umkehrpunkts dreht, wobei innerhalb der schmalen Messzone mehrere Durchmesser-Messwerte erfasst werden und zur Bestimmung des Durchmesser-Messwerts über die mehrere kurz hintereinander erfasste Durchmesser-Messwerte gemittelt wird.

7. Honverfahren nach einem der Ansprüche 3 bis 5, **dadurch gekennzeichnet, dass** die für den Soll-Ist-Vergleich und/oder für die Mittelwertbildung genutzten Durchmesser-Messsignale in einem Zwischenbereich zwischen den Umkehrpunkten erfasst werden, insbesondere in einem Mittelbereich zwischen den Umkehrpunkten.

8. Honverfahren nach einem der vorhergehenden Ansprüche, **gekennzeichnet durch** eine kontinuierliche Zustellung von Schneidstoffkörpern des Honwerkzeugs während der Hubveränderungsphase, insbesondere mit konstanter oder pulsender Zustellgeschwindigkeit.

9. Honverfahren nach einem der vorhergehenden Ansprüche, **gekennzeichnet durch** eine Steuerung der auf das Honwerkzeug übertragenen Andrückkraft von Schneidstoffkörpern des Honwerkzeugs in der Weise, dass die Andrückkraft während der Hubveränderungsphase im Wesentlichen konstant bleibt.

10. Honverfahren nach einem der vorhergehenden Ansprüche, **dadurch gekennzeichnet, dass** das Honwerkzeug (150) mindestens eine der folgenden Eigenschaften aufweist:
(i) die axiale Länge der Schneidstoffkörper liegt bei weniger als 50% des wirksamen Außendurchmessers der Schneidgruppe (155), insbesondere zwischen 10% und 30% dieses Außendurchmessers;
(ii) die axiale Länge der Schneidstoffkörper liegt im Bereich von 5 mm bis 90 mm;
(iii) die axiale Länge der Schneidstoffkörper beträgt weniger als 35% der Bohrungslänge der Bohrung;
(iv) die Schneidstoffkörper sind als in Umfangsrichtung schmale Schneidstoffleisten (156) ausgebildet, deren in Umfangsrichtung gemessene Breite klein gegenüber der axialen Länge der Schneidstoffleisten ist, wobei vorzugsweise ein Aspektverhältnis zwischen Länge und Breite im Bereich von 4:1 bis 20:1 liegt;
(v) im axialen Bereich der Schneidstoffkörper (156), insbesondere auf halber Höhe der axialen Länge der Schneidstoffkörper, sind Messsensoren eines Durchmesser-Messsystems angebracht, insbesondere Messdüsen (172-1, 172-2) eines pneumatischen Durchmesser-Messsystems.

11. Honverfahren nach einem der vorhergehenden Ansprüche, **dadurch gekennzeichnet, dass** ein Honwerkzeug mit Doppelaufweitung verwendet wird, wobei die Schneidgruppe zwei Untergruppen von Schneidstoffkörpern aufweist, die separat voneinander zustellbar sind, wobei vorzugsweise die Schneidstoffkörper der Untergruppen unterschiedlich feine oder grobe Körnung aufweisen.

12. Honverfahren nach einem der vorhergehenden Ansprüche, **dadurch gekennzeichnet, dass** ein Honwerkzeug verwendet wird, bei dem die Schneidgruppe (130) mehrere radial zustellbare Schneidstoffkörper-Träger (158) aufweist, die jeweils einen Umfangswinkelbereich abdecken, der größer ist als die axiale Länge der Schneidstoffkörper, wobei vorzugsweise jeder der Schneidstoffkörper-Träger zwei, drei, vier oder mehr einzelne Schneidstoffkörper (156) in Form schmaler Honleisten trägt.

13. Honverfahren nach einem der vorhergehenden Ansprüche, **dadurch gekennzeichnet, dass** ein Honwerkzeug verwendet wird, das nicht-schneidende Führungsleisten zur Führung des Honwerkzeugs in der Bohrung aufweist, wobei die Führungsleisten fest am Werkzeugkörper montiert oder separat von den Schneidstoffkörpern zustellbar sind.

14. Bearbeitungsmaschine (100) zur Feinbearbeitung einer Innenfläche (214) einer Bohrung (210) in einem Werkstück (200) mithilfe mindestens einer Honoperation, insbesondere zum Honen von Zylinderlaufflächen bei der Herstellung von Zylinderblöcken oder Zylinderlaufbuchsen für Hubkolbenmaschinen, mit
mindestens einer Spindel (140) zur Bewegung eines an die Spindel angekuppelten Honwerkzeugs (150) innerhalb der Bohrung derart, dass durch mindestens einen an dem Honwerkzeug angebrachten Schneidstoffkörper (156) eine Bearbeitung der Innenfläche erfolgt, einem Durchmesser-Messsystem (170) zur Messung des Ist-Durchmessers der Bohrung in vorgebbaren Messebenen oder Messzonen während der Honbearbeitung mittels am Honwerkzeug (150) angebrachter Messsensoren und
einer Steuereinrichtung (180), die dafür eingerichtet ist, Durchmesser-Messsignale des Durchmesser-Messsystems (170) zu verarbeiten,
**dadurch gekennzeichnet, dass**
die Steuereinrichtung dafür eingerichtet ist, zur Ermittlung des Durchmesser-Messsignals eine Messwerterfassung über einen gleitenden Mittelwert zu steuern, wobei der gleitende Mittelwert in einem Abschnitt der Bohrung oder über den gesamten gerade bearbeiteten Abschnitt der Bohrung ermittelt wird, und die Steuereinrichtung weiterhin dafür eingerichtet ist, einen Hubantrieb (160) der Spindel in Abhängigkeit von dem Durchmesser-Messsignal zu steuern.

## Claims

1. Honing method for machining the internal face of a bore in a workpiece with the aid of at least one honing operation, in particular for honing cylinder running faces in the production of cylinder blocks or cylinder liners for reciprocating piston engines, wherein
during a honing operation a flaring-capable honing tool that is coupled to a spindle is moved back and forth within the bore for generating a reciprocating movement in the axial direction of the bore, and is simultaneously rotated for generating a rotating movement that superimposes the reciprocating movement,
a bore shape having an axial contour profile, which is rotationally symmetrical in terms of a bore axis and deviates from the circular cylindrical shape, is generated, and
for generating an axially variable material removal in at least one stroke modification phase a stroke length and/or a stroke orientation of the reciprocating movement is modified,
a honing tool (150) which has an annular cutting group (155) having a plurality of radially actuatable cutting material members (156) that are distributed about the circumference of a tool body (152) is used,
during the stroke modification phase a measurement of the actual diameter of the bore is carried out for determining a diameter measurement signal which represents the actual diameter of the bore in a measurement plane, and
the stroke length and/or the stroke orientation of the reciprocating movement is controlled as a function of the diameter measurement signal, **characterized in that**
for determining the diameter measurement signal a measured value detection takes place by way of a floating mean value, wherein the floating mean value is determined in a portion of the bore or across the entire currently machined portion of the bore.

2. Honing method according to Claim 1, **characterized in that** the reciprocating movement comprises a multiplicity of successive strokes which run in each case between a lower reversal point (UU) and an upper reversal point (UO), and **in that** the axial position of at least one of the reversal points of a stroke is dynamically modified as a function of a diameter measurement signal that is determined in a preceding stroke,
wherein the axial position of one of the reversal points is preferably fixed and only the axial position of the other reversal point is dynamically varied as a function of the diameter measurement signal,
wherein the axial contour profile has in particular a portion in which the nominal diameter continuously increases between a first axial position having a smallest diameter within the portion, and a second axial position having a largest diameter within the portion, wherein the reversal point associated with the second axial position is fixed and the axial position of the other reversal point is dynamically varied as a function of the diameter measurement signal.

3. Honing method according to one of the preceding claims, **characterized in that** prior to the honing operation an axial nominal contour profile which represents a nominal diameter as a function of the axial stroke position is predefined, **in that** in a stroke the actual diameter measured at a stroke position is compared with the nominal diameter associated with the stroke position, and the diameter deviation for the stroke position is determined from the comparison, and **in that** the stroke length and/or the stroke position of a subsequent stroke in relation to a nominal stroke length and/or a nominal stroke orientation is modified as a function of the diameter deviation, wherein the stroke length and/or the stroke orientation of the reciprocating movement is preferably modified as a function of the determined diameter deviation in such a manner that the diameter deviation at the axial position is at least in part compensated for by modifying the number of overlapping honing actions at the axial position.

4. Honing method according to Claim 3, **characterized in that** a reduction in a number of overlapping honing actions at an axial position is generated by modifying the stroke length and/or stroke orientation of the reciprocating movement when the diameter deviation results in an actual diameter that is too large in comparison to the nominal diameter, and **in that** an increase in a number of overlapping honing actions at an axial position is generated by modifying the stroke length and/or stroke orientation of the reciprocating movement when the diameter deviation results in an actual diameter that is too small in comparison to the nominal diameter.

5. Honing method according to one of the preceding claims, **characterized in that** in the measured value detection by way of a floating mean value the measured value detection takes place by way of an adjustable quantity of measuring points.

6. Honing method according to one of the preceding claims, **characterized in that** the measurement of the actual diameter is carried out when the honing tool is situated in the region of a reversal point of the reciprocating movement,
wherein the diameter measurement is carried out such that the honing tool during the diameter measurement rotates in an axially narrow measurement zone in the region of a reversal point, wherein a plurality of diameter measurement values are detected within the narrow measurement zone, and averaging across the plurality of diameter measurement values detected in short succession takes place in order for the diameter measurement value to be determined.

7. Honing method according to one of Claims 3 to 5, **characterized in that** the diameter measurement signals utilized for the nominal/actual comparison and/or for forming the mean value are detected in an intermediate region between the reversal points, in particular in a central region between the reversal points.

8. Honing method according to one of the preceding claims, **characterized by** a continuous actuation of cutting material members of the honing tool during the stroke modification phase, in particular at a constant or pulsed actuation rate.

9. Honing method according to one of the preceding claims, **characterized by** controlling the contact pressure force of cutting material members of the honing tool that is transmitted to the honing tool in a manner such that the contact pressure force remains substantially constant during the stroke modification phase.

10. Honing method according to one of the preceding claims, **characterized in that** the honing tool (150) has at least one of the following properties:
(i) the axial length of the cutting material members is less than 50% of the effective external diameter of the cutting group (155), in particular between 10% and 30% of said external diameter;
(ii) the axial length of the cutting material members is in the range from 5 mm to 90 mm;
(iii) the axial length of the cutting material members is less than 35% of the bore length of the bore;
(iv) the cutting material members are configured as cutting material strips (156) that are narrow in the circumferential direction, the width of said cutting material members measured in the circumferential direction being small in relation to the axial length of the cutting material strips, wherein an aspect ratio between the length and the width is preferably in the range from 4:1 to 20:1;
(v) measuring sensors of a diameter measurement system, in particular measuring nozzles (172-1, 172-2) of a pneumatic diameter measurement system, are attached in the axial region of the cutting material members (156), in particular at half the height of the axial length of the cutting material members.

11. Honing method according to one of the preceding claims, **characterized in that** a honing tool with double flaring is used, wherein the cutting group has two sub-groups of cutting material members which are actuatable in a mutually separate manner, wherein the cutting material members of the sub-groups preferably have grit sizes of dissimilar fineness or coarseness.

12. Honing method according to one of the preceding claims, **characterized in that** a honing tool in which the cutting group (130) has a plurality of radially actuatable cutting material member supports (158) which cover in each case one circumferential angle range is used, said circumferential angle range being greater than the axial length of the cutting material members, wherein each of the cutting material member supports preferably supports two, three, four, or more, individual cutting material members (156) in the form of narrow honing strips.

13. Honing method according to one of the preceding claims, **characterized in that** a honing tool is used which for guiding the honing tool in the bore has non-cutting guide strips, wherein the guide strips are fixedly assembled on the tool body, or are actuatable separately from the cutting material members.

14. Machine tool (100) for the precision machining of an internal face (214) of a bore (210) in a workpiece (200) with the aid of at least one honing operation, in particular for honing cylinder running faces in the production of cylinder blocks or cylinder liners for reciprocating piston engines, having at least one spindle (140) for moving a honing tool (150) coupled to the spindle in such a manner within the bore that machining of the internal face takes place by at least one of the cutting material members (156) attached to the honing tool,
a diameter measurement system (170) for measuring the actual diameter of the bore in predefinable measuring planes on measuring zones during the honing operation by means of measurement sensors attached to the honing tool (150), and
a control installation (180) which is specified to process diameter measurement signals of the diameter measurement system (170),
**characterized in that**
the control installation for determining the diameter measurement signal is specified to control a measured value detection by way of a floating mean value, wherein the floating mean value is determined in a portion of the bore or across the entire currently machined portion of the bore, and the control installation is furthermore specified to control a reciprocating drive (160) of the spindle as a function of the diameter measurement signal.

## Revendications

1. Procédé de rodage destiné à l'usinage de la surface intérieure d'un alésage dans une pièce à l'aide d'au moins une opération de rodage, en particulier destiné au rodage de surfaces de glissement de cylindre lors de la fabrication de blocs-cylindres ou de chemises de cylindre pour des machines à piston alternatif, dans lequel pendant une opération de rodage, un outil de rodage pouvant être élargi, accouplé à une broche, est déplacé en va-et-vient à l'intérieur de l'alésage pour produire un mouvement de course dans la direction axiale de l'alésage et est en même temps mis en rotation pour produire un mouvement rotatif superposé au mouvement de course,
une forme d'alésage à symétrie de révolution par rapport à un axe d'alésage et s'écartant de la forme cylindrique circulaire est produite avec un profil de contour axial, et
une longueur de course et/ou une position de course du mouvement de course est modifiée afin de produire un enlèvement de matière qui varie axialement dans au moins une phase de modification de course,
un outil de rodage (150) est utilisé, lequel présente un groupe de coupe (155) annulaire doté de plusieurs corps en matériau de coupe (156) répartis sur la périphérie d'un corps d'outil (152) et pouvant être avancés radialement,
pendant la phase de modification de course, une mesure du diamètre réel de l'alésage est effectuée pour déterminer un signal de mesure de diamètre qui représente le diamètre réel de l'alésage dans un plan de mesure, et la longueur de course et/ou la position de course est/sont commandée(s) en fonction du signal de mesure de diamètre,
**caractérisé en ce que**
pour la détermination du signal de mesure de diamètre, une détection de valeurs de mesure est effectuée sur une moyenne mobile, la moyenne mobile étant déterminée dans une section de l'alésage ou sur toute la section usinée droite de l'alésage.

2. Procédé de rodage selon la revendication 1, **caractérisé en ce que** le mouvement de course comprend une pluralité de courses successives, qui s'étendent respectivement entre un point d'inversion inférieur (UU) et un point d'inversion supérieur (UO), et **en ce que** la position axiale d'au moins l'un des points d'inversion d'une course est modifiée dynamiquement en fonction d'un signal de mesure de diamètre déterminé lors d'une course précédente,
de préférence la position axiale de l'un des points d'inversion étant fixée et seulement la position axiale de l'autre point d'inversion étant modifiée dynamiquement en fonction du signal de mesure de diamètre,
en particulier le profil de contour axial présentant une section dans laquelle le diamètre de consigne augmente de manière continue entre une première position axiale présentant un diamètre le plus petit à l'intérieur de la section et une deuxième position axiale présentant un diamètre le plus grand à l'intérieur de la section, le point d'inversion associé à la deuxième position axiale étant fixe et la position axiale de l'autre point d'inversion étant modifiée dynamiquement en fonction du signal de mesure de diamètre.

3. Procédé de rodage selon l'une des revendications précédentes, **caractérisé en ce qu'**avant le début de l'opération de rodage, un profil de contour de consigne axial est prédéfini, lequel représente un diamètre de consigne en fonction de la position de course axiale, **en ce que**, lors d'une course, le diamètre réel mesuré pour une position de course est comparé au diamètre de consigne associé à la position de course et, à partir de la comparaison, un écart de diamètre pour la position de course est déterminé et **en ce que** la longueur de course et/ou la position de course d'une course suivante est/sont modifiée(s) en fonction de l'écart de diamètre par rapport à une longueur de course de consigne et/ou une position de course de consigne,
de préférence la longueur de course et/ou la position de course du mouvement de course étant modifiée(s) en fonction de l'écart de diamètre déterminé, de telle sorte que par une modification du nombre de répétitions de rodage à la position axiale, l'écart de diamètre à la position axiale est compensé au moins partiellement.

4. Procédé de rodage selon la revendication 3, **caractérisé en ce que**, par modification de la longueur de course et/ou de la position de course du mouvement de course, une réduction d'un nombre de répétitions de rodage à une position axiale est générée lorsque l'écart de diamètre produit un diamètre réel trop grand par comparaison avec le diamètre de consigne et **en ce que**, par modification de la longueur de course et/ou de la position de course du mouvement de course, une augmentation d'un nombre de répétitions de rodage à une position axiale est générée lorsque l'écart de diamètre produit un diamètre réel trop petit par comparaison avec le diamètre de consigne.

5. Procédé de rodage selon l'une des revendications précédentes, **caractérisé en ce que**, lors de la détection de valeurs de mesure sur une moyenne mobile, la détection de valeurs de mesure s'effectue sur une quantité réglable de points de mesure.

6. Procédé de rodage selon l'une des revendications précédentes, **caractérisé en ce que** la mesure du diamètre réel est effectuée lorsque l'outil de rodage se trouve dans la région d'un point d'inversion du mouvement de course,
la mesure de diamètre étant effectuée de telle sorte que l'outil de rodage tourne dans une zone de mesure axialement étroite dans la région d'un point d'inversion pendant la mesure de diamètre, plusieurs valeurs de mesure de diamètre étant détectées à l'intérieur de la zone de mesure étroite et, pour la détermination de la valeur de mesure de diamètre, on fait la moyenne de la pluralité de valeurs de mesure de diamètre détectées à intervalles rapprochés.

7. Procédé de rodage selon l'une des revendications 3 à 5, **caractérisé en ce que** les signaux de mesure de diamètre utilisés pour la comparaison consigne/réel et/ou pour le calcul de valeur moyenne sont détectés dans une région intermédiaire entre les points d'inversion, en particulier dans une région centrale entre les points d'inversion.

8. Procédé de rodage selon l'une des revendications précédentes, **caractérisé par** une avance continue de corps en matériau de coupe de l'outil de rodage pendant la phase de modification de course, en particulier à vitesse d'avance constante ou pulsée.

9. Procédé de rodage selon l'une des revendications précédentes, **caractérisé par** une commande de la force de pression de corps en matériau de coupe de l'outil de rodage qui est transmise à l'outil de rodage de telle manière que la force de pression demeure sensiblement constante pendant la phase de modification de course.

10. Procédé de rodage selon l'une des revendications précédentes, **caractérisé en ce que** l'outil de rodage (150) présente au moins l'une des caractéristiques suivantes :
(i) la longueur axiale des corps en matériau de coupe est inférieure à 50% du diamètre extérieur effectif du groupe de coupe (155), en particulier comprise entre 10% et 30% de ce diamètre extérieur ;
(ii) la longueur axiale des corps en matériau de coupe se situe dans la plage de 5 mm à 90 mm ;
(iii) la longueur axiale des corps en matériau de coupe vaut moins que 35% de la longueur de l'alésage ;
(iv) les corps en matériau de coupe sont réalisés sous forme de barrettes en matériau de coupe (156) étroites dans la direction circonférentielle, barrettes dont la largeur mesurée dans la direction circonférentielle est petite par rapport à la longueur axiale des barrettes en matériau de coupe, de préférence un rapport d'aspect entre longueur et largeur se situant dans la plage de 4: 1 à 20:1 ;
(v) dans la région axiale des corps en matériau de coupe (156), en particulier à mi-hauteur de la longueur axiale des corps en matériau de coupe, sont installés des capteurs de mesure d'un système de mesure de diamètre, en particulier des buses de mesure (172-1, 172-2) d'un système pneumatique de mesure de diamètre.

11. Procédé de rodage selon l'une des revendications précédentes, **caractérisé en ce qu'**un outil de rodage à double élargissement est utilisé, le groupe de coupe présentant deux sous-groupes de corps en matériau de coupe qui peuvent être avancés séparément l'un de l'autre, les corps en matériau de coupe des sous-groupes présentant de préférence une dimension de grains différemment fine ou grosse.

12. Procédé de rodage selon l'une des revendications précédentes, **caractérisé en ce qu'**un outil de rodage est utilisé, dans lequel le groupe de coupe (130) présente plusieurs supports de corps en matériau de coupe (158) pouvant être avancés radialement, qui recouvrent respectivement une région angulaire circonférentielle qui est plus grande que la longueur axiale des corps en matériau de coupe, de préférence chacun des supports de corps en matériau de coupe supportant deux, trois, quatre ou plus de quatre corps en matériau de coupe (156) individuels sous la forme de barrettes de rodage étroites.

13. Procédé de rodage selon l'une des revendications précédentes, **caractérisé en ce qu'**un outil de rodage est utilisé, qui présente des barrettes de guidage non coupantes servant au guidage de l'outil de rodage dans l'alésage, les barrettes de guidage étant montées fixement sur le corps d'outil ou pouvant être avancées séparément des corps en matériau de coupe.

14. Machine d'usinage (100) destinée à l'usinage de précision d'une surface intérieure (214) d'un alésage (210) dans une pièce (200) à l'aide d'au moins une opération de rodage, en particulier destinée au rodage de surfaces de glissement de cylindre lors de la fabrication de blocs-cylindres ou de chemises de cylindre pour des machines à piston alternatif, comprenant au moins une broche (140) servant à déplacer un outil de rodage (150) accouplé à la broche à l'intérieur de l'alésage de telle sorte qu'au moins un corps en matériau de coupe (156) installé sur l'outil de rodage effectue un usinage de la surface intérieure,
un système de mesure de diamètre (170) servant à la mesure du diamètre réel de l'alésage dans des plans de mesure ou des zones de mesure pouvant être prédéfinis pendant l'usinage par rodage au moyen de capteurs de mesure installés sur l'outil de rodage (150), et
un dispositif de commande (180) qui est conçu pour traiter des signaux de mesure de diamètre du système de mesure de diamètre (170),
**caractérisée en ce que**
le dispositif de commande est conçu pour commander une détection de valeurs de mesure sur une moyenne mobile pour la détermination du signal de mesure de diamètre, la moyenne mobile étant déterminée dans une section de l'alésage ou sur toute la section usinée droite de l'alésage, et le dispositif de commande étant en outre conçu pour commander un entraînement de course (160) de la broche en fonction du signal de mesure de diamètre.
